(19) Europäisches Patentamt
European Patent Office
Office européen des brevets

(11) **EP 4 779 535 A1**

(12) # EUROPEAN PATENT APPLICATION

(43) Date of publication:
**22.07.2026 Bulletin 2026/30**

(21) Application number: **26151519.1**

(22) Date of filing: **13.01.2026**

(51) International Patent Classification (IPC):
***G06N 20/00*** *(2019.01)*    ***G06V 10/86*** *(2022.01)*
***G06N 5/022*** *(2023.01)*

(52) Cooperative Patent Classification (CPC):
**G06N 20/00; G06N 5/022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.01.2025 US 202519033295**

(71) Applicant: **Microsoft Technology Licensing, LLC
Redmond, WA 98052 (US)**

(72) Inventors:
- **CHEN, Yiye
  Redmond, Washington, 98052 (US)**

- **SAWHNEY, Harpreet Singh
  Redmond, Washington, 98052 (US)**
- **GYDE, Nicholas Alexander
  Redmond, Washington, 98052 (US)**
- **JIAN, Yanan
  Redmond, Washington, 98052 (US)**
- **SAUNDERS, Jack Roe
  Redmond, Washington, 98052 (US)**
- **LUNDELL, Benjamin Eliot
  Redmond, Washington, 98052 (US)**

(74) Representative: **CMS Cameron McKenna Nabarro
Olswang LLP
Cannon Place
78 Cannon Street
London EC4N 6AF (GB)**

(54) **PERFORMING SPATIAL REASONING USING GENERATIVE LANGUAGE MODEL**

(57) Examples are disclosed that relate to performing reasoning processes using generative language models. One disclosed example provides a method of performing a spatial reasoning task. The method comprises, iteratively, at a reasoner agent, receiving query results from a retriever agent, and based upon the query results, generating a reasoner prompt. The method further comprises inputting the reasoner prompt into a reasoner language model, receiving a reasoner output from the reasoner language model, and sending a query to a retriever agent. The method further comprises, at the retriever agent, receiving the query from the reasoner agent, generating a retriever prompt, and inputting the retriever prompt into a retriever language model. The method further comprises receiving an output from the retriever language model, querying scene data, and receiving one or more results of the query, and sending the one or more results of the query to the reasoner agent.

FIG. 1

**Description**

BACKGROUND

Performing complex spatial reasoning tasks, whether in a digital or real-world environment, involves planning and execution of multiple steps to complete the tasks. The embedding of reasoning and planning capabilities in computerized autonomous agents to solve spatial reasoning tasks is an active area of research and development in artificial intelligence.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.
Examples are disclosed that relate to performing spatial reasoning processes grounded to situated environments using a generative language model, such as a large language model (LLM). One example provides a computing system. The computing system comprises a storage subsystem comprising one or more data storage devices, and a logic subsystem comprising one or more logic devices. The storage subsystem comprises code executable by the logic subsystem to execute a spatial reasoning task, by, at a reasoner agent, generating a reasoner prompt containing task information and a schema of scene data, and inputting the reasoner prompt into a reasoner language model. The code is further executable by the logic subsystem to execute the spatial reasoning task by, at the reasoner agent, receiving a reasoner response, and sending a query to the retriever agent based upon the reasoner response. The code is further executable by the logic subsystem to execute the spatial reasoning task by, at the retriever agent, receiving the query from the reasoner agent, generating a retriever prompt containing the schema of the scene data and the query, and inputting the retriever prompt into a retriever language model. The code is further executable by the logic subsystem to execute the spatial reasoning task by, at the retriever agent, receiving a retriever output from the retriever language model, the retriever output comprising code representing a query to query scene data represented by the schema of the scene data. The code is further executable by the logic subsystem to execute the spatial reasoning task by, at the retriever agent, querying the scene data using the code representing the query, receiving one or more results of the query, and sending the one or more results of the query to the reasoner agent. The code is further executable by the logic subsystem to execute the spatial reasoning task by, at the reasoner agent, using the one or more results of the query.
Another example provides a method of performing a spatial reasoning task. The method comprises, iteratively, at a reasoner agent, receiving query results from a retriever agent, and based upon the query results, generating a reasoner prompt. The method further comprises inputting the reasoner prompt into a reasoner language model, receiving a reasoner output from the reasoner language model, and sending a query to a retriever agent. The method further comprises, at the retriever agent, receiving the query from the reasoner agent, generating a retriever prompt, and inputting the retriever prompt into a retriever language model. The method further comprises receiving an output from the retriever language model, querying scene data, and receiving one or more results of the query, and sending the one or more results of the query to the reasoner agent.

BRIEF DESCRIPTION OF THE DRAWINGS

FIG. 1 schematically shows an example computing system configured to perform a spatial reasoning task.
FIG. 2 schematically shows an example process flow for performing a spatial reasoning task using a reasoner agent and a retriever agent.
FIGS. 3A-3D schematically show example two-dimensional (2D) environments for performing spatial reasoning tasks.
FIG. 4 schematically shows an example three-dimensional (3D) environment for performing spatial reasoning tasks.
FIGS. 5A-5B schematically show an example method of performing a spatial reasoning task using a generative language model.
FIGS. 6A-6B schematically show another example method for performing a spatial reasoning task using a generative language model.
FIG. 7 schematically shows an example method for preventing errors during performance of a spatial reasoning task.
FIG. 8 schematically shows an example computing system.

DETAILED DESCRIPTION

The ability to perform complex reasoning is a challenging issue in the development of autonomous agents for the execution of spatial reasoning tasks. Some approaches to such complex reasoning have utilized large language models, or LLMs. Some such approaches have successfully leveraged the world knowledge encapsulated in LLMs for plan generation, interaction, and action selection. However, grounding these abilities to a specific environment remains challenging due to the absence of a generalizable and explicit representation of environmental spatial and semantic information that LLMs can process. Grounding supplies LLMs with task-specific knowledge not available as part of the LLM's trained knowledge. One vein of research explores leveraging LLMs to interface with external tools for the extraction of task-oriented states from perceptual data. Although this strategy has shown effectiveness for several manipulation and planning tasks, it requires LLMs to compose tools in a predetermined way taught through in-context learning, restricting LLMs from reasoning flexibly on novel tasks. Furthermore, sensory inputs (such as images) capture only a fraction of the environmental information and are inadequate for tasks necessitating a comprehensive understanding of a 3D scene.

In contrast, scene graphs have emerged as a powerful and scalable high-level representation of environments. A scene graph is a graph structure that represents spatial relationships between entities in an environment (physical or virtual), as well as properties of entities within the environment. Unlike images, scene graphs explicitly encapsulate spatial relationships and offer the flexibility to incorporate diverse semantic and quantitative attributes.

Reasoning requires LLMs to interpret task descriptions, comprehend the relational and semantic information within the scene graph, and apply intrinsic knowledge to solve the task by grounding on the scene graph (and, in turn, on the environment). Some recent research has explored inputting scene graphs-as-text for LLMs. Scene graphs input as text are parsable by LLMs, thus enabling the direct grounding of LLM reasoning to the underlying environment. LLMs have been found to possess a preliminary capacity to interpret scene graph topology. However, LLMs are prone to hallucinations and/or can exceed input token limits when handling large scene graphs input in text form.

One proposed approach to tackling challenges with using LLMs to interpret scene graph topology is to instruct an LLM to first explore the graph to identify the sub-graph pertinent to a given task, and then perform reasoning on the retrieved part of the graph to generate the task solution. The exploration phase can employ a heuristic strategy, such as by exploring neighborhood nodes and edges of visited parts of the scene graph, or by expanding the sub-tree rooted at nodes at a certain hierarchical level. While such sub-graph identification strategies can be effective for information collection, such strategies are less well-suited for more intricate tasks that require a comprehensive understanding of an entire graph. Such sub-graph identification strategies also can be limited in the ability to dynamically shift focus based on the reasoning process and requirements of task sub-steps. Additionally, LLMs currently have limited numerical reasoning ability. This limitation restricts the utility of LLMs in understanding complex scenes from textualized graphs.

Accordingly, examples are disclosed that relate to performing computer-automated reasoning processes in which reasoning and information retrieval are performed by separate agents. These separate agents are referred to herein as a reasoner agent and a retriever agent. The use of separate reasoner and retriever agents allow reasoning and information retrieval phases to be interleaved to solving a multi-step complex spatial reasoning task in a step-by-step manner. The interleaving helps to ensure that the process focuses on the information that is selectively aligned with solving a current step of the spatial reasoning task, and that the reasoning trace is grounded in scene data by factoring in retrieved scene data information. The reasoner agent is configured to decompose the spatial reasoning task into a series of iteratively determined steps, and to generate queries for information to guide the determination of subsequent steps. The retriever agent is configured to process queries generated by the reasoner, and to write code to retrieve related scene data information for the reasoner agent. While the disclosed examples are described in the context of LLMs, other generative language models, such as small language models (SLMs), also may be may be used to perform spatial reasoning tasks according to the disclosed examples.

To prevent hallucinations arising from the use of textual representations of scene graphs in LLM prompts, both agents utilize schemas of the scene data in LLM prompts, rather than textual representations of an entire scene graph or other scene data structure (e.g. a scene data database). The schema of the scene data describes the types, format, and semantics of the scene information in the scene data. The schema can guide the reasoner agent to determine what information is helpful to solve a given spatial reasoning task, and can inform the retriever agent to write code for accessing the scene data to obtain the desired information. The reasoner agent likewise can be equipped with code-writing capabilities, such as to conduct numerical reasoning and employ external tools for well-defined atomic problems. This can help to enhance the ability for the disclosed examples to tackle complex scene understanding and planning tasks.

To further help avoid hallucinations, at each iteration the retriever ("retriever prompt") may omit a history of prior prompts. This can help the retriever agent to more accurately locate a portion of a scene graph or other scene data structure that is most relevant to the current query from the reasoner agent, without influence by prior retriever prompts. In contrast, the reasoner agent prompt ("reasoner prompt") can include a history of prior prompts and retrieved information to provide the reasoner agent with context of the overall problem as steps are iteratively determined. As explained in more detail below, the disclosed examples can help to address the above-described difficulties that real-world or digital autonomous agents face in other approaches to solving complex spatial reasoning tasks.

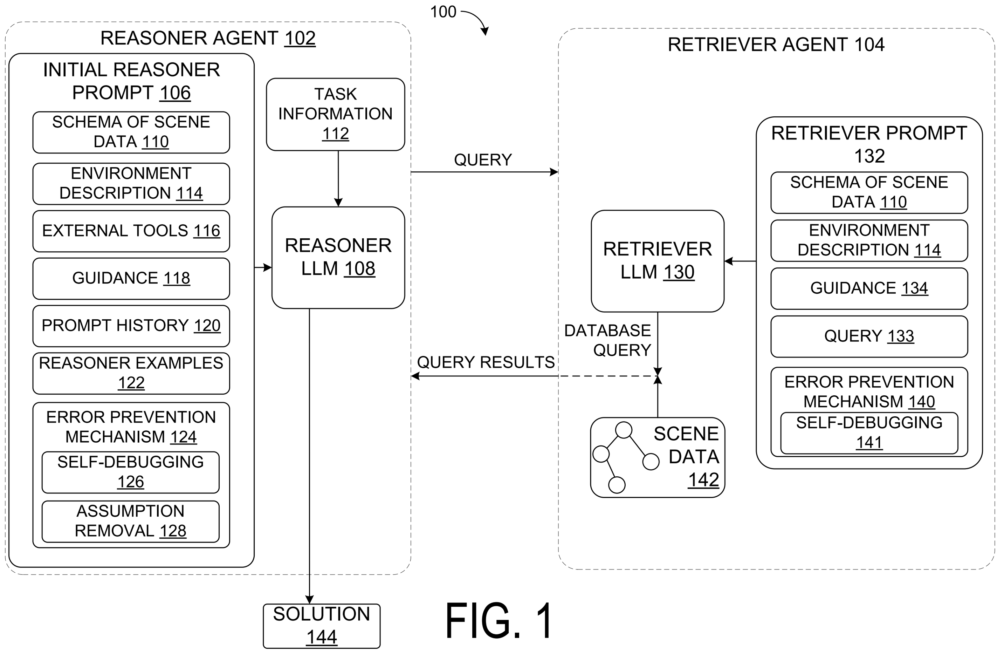

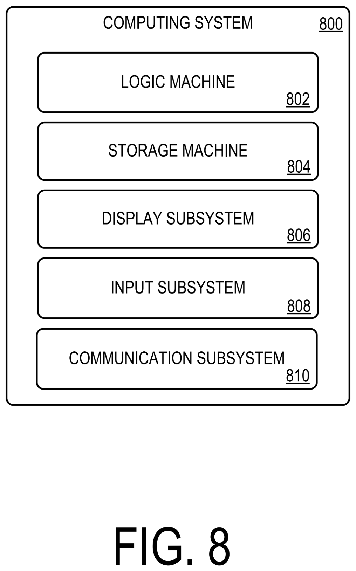

FIG. 1 schematically shows an example computing system 100 configured to perform a spatial reasoning task. Computing system 100 comprises one or more computing devices. The one or more computing devices include memory and one or more processing devices. The memory stores code executable by the one or more processing devices to implement the example processes disclosed. An example computing system is described in more detail below with regard to FIG. 8. Computing system 100 may take the form of a single computing device or a network of computing devices (e.g. computing devices in a data center) in various examples.

Computing system 100 comprises code executable to implement a reasoner agent 102 and a retriever agent 104. As mentioned above, reasoner agent 102 and retriever agent 104 cooperate to solve a spatial reasoning task in an iterative manner. Reasoner agent 102 steers task-solving iterations, determining at each iteration a next step to take to in performing a complex spatial reasoning task. The next step can be invoking an external tool, issuing another query to the retriever agent, or other action to work toward the solution to the spatial reasoning problem. At some or all iterations, reasoner agent 102 can output queries to retriever agent, instructing retriever agent to retrieve task-relevant scene data. The task-relevant scene data thus retrieved and provided to the reasoner agent allows the reasoner agent 102 to determine one or more subsequent steps to take in solving the spatial reasoning task. Further, in some iterations, reasoner agent 102 can call external tools to perform steps in a spatial reasoning task, as described below.

The reasoner agent 102 comprises a generative language model, such as an LLM. The reasoner agent 102 comprises code configured to input a reasoner prompt 106 into a generative language model, referred to as reasoner LLM 108, at each iterative stage. In other examples, the generative language model can take another form, such as an SLM. FIG. 1 illustrates contents of an example reasoner prompt 106 that can be input into a reasoner LLM 108 of the reasoner agent 102. Reasoner prompt 106 comprises a schema of scene data 110. The schema of scene data 110 is textual in format, and describes the types, format, and semantics of the scene information available for solving the spatial reasoning task. The schema of scene data 110 can guide the reasoner LLM 108 to determine what information is helpful for solving the spatial reasoning task, while avoiding problems with hallucinations associated with inputting an entire scene graph (or other representation of scene data). In some examples, the schema of scene data 110 may be schema of a scene graph. In other examples, the scheme of scene data 110 may be a schema of a database or other data structure storing scene data.

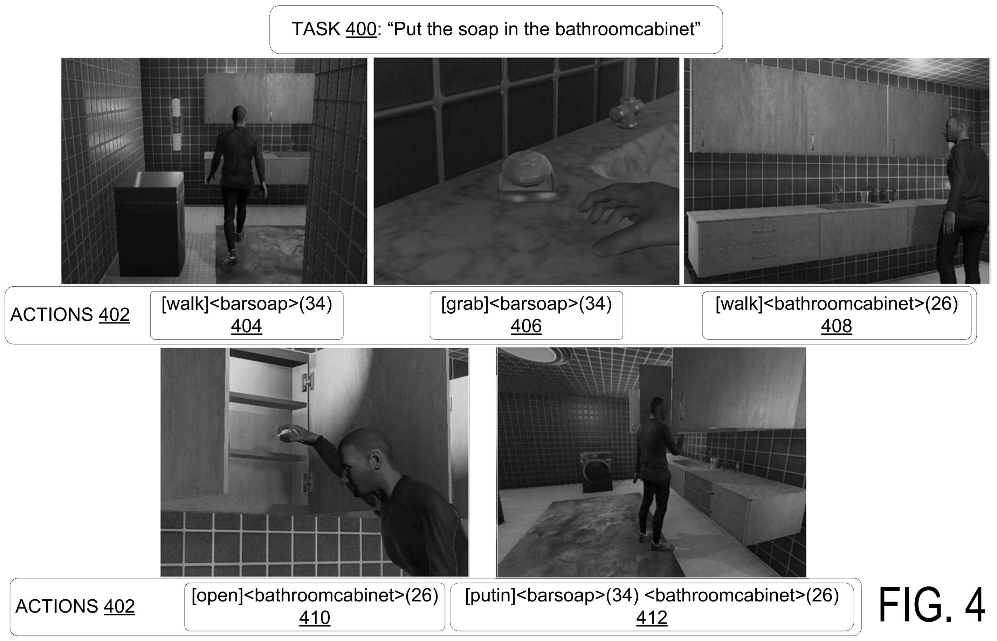

Reasoner prompt 106 further comprises task information 112. Task information 112 is a textual description of the spatial reasoning task to be performed. For example, task information 112 may instruct the reasoner agent 102 to "pick up the red box", referring to scene data with multiple rooms, one of which has a red box. Further examples will be discussed below with regard to FIGS. 4-5.

In some examples, reasoner prompt 106 may further comprise an environment description 114. The environment description 114 can comprise a spatial description of the environment relevant to performing the spatial reasoning task, such as whether the environment contains multiple rooms or doors, whether a key is needed to open doors, etc. In some such examples, reasoner prompt 106 may comprise instructions to build an environment description by issuing queries to the retriever agent 104.

The reasoner prompt 106 further can comprise a list of external tools 116 usable by reasoner LLM 108. The external tools 116 are code that can be used to execute algorithms to solve some spatial reasoning steps in the overall solution to the spatial reasoning problem. The reasoner LLM 108 is equipped with code-writing capabilities to use the external tools 116. As examples, an external tool 116 can comprise a pathfinding algorithm for traversing an environment, or an algorithm for determining grasp points on an object. In the pathfinding example, reasoner LLM 108 can write code to call code that can perform the pathfinding algorithm based upon scene data relevant to the spatial reasoning task. As LLMs may have limited capabilities for solving complex tasks (e.g. LLMs can provide unreliable solutions to quantitative problems), leveraging known algorithms for complex tasks beyond the capabilities of LLMs can help to prevent hallucinations and reduce the computational burden on LLMs.

Reasoner prompt 106 further can comprise guidance 118. Guidance 118 is textual instruction that defines behaviors of, and one or more formats for information output by, reasoner LLM 108. For example, guidance 118 can comprise instructions for reasoner LLM 108 to solve tasks step-by step, generate queries in a text-based format, and/or utilize external tools 116 to solve the spatial reasoning task.

Reasoner prompt 106 further comprises a prompt history 120. Prompt history 120 comprises a history of queries and responses sent to and received from the retriever agent 104, up to a current prompt. Since the reasoner agent 102 controls the spatial task-solving process, prompting the reasoner agent 102 with the prompt history can provide context that can help to inform the next steps to take in the spatial reasoning task, and what information to request in the next query to retriever agent 104.

In some examples, reasoner prompt 106 further can comprise one or more examples (referred to as reasoner examples 122 herein) of successful execution(s) of spatial reasoning tasks. The reasoner examples 122 can train the reasoner LLM 108 on successful reasoning processes for solving a spatial reasoning task. The reasoner examples 122 can comprise, for example, one or more one-shot examples and/or one or more or few-shot examples detailing instances of solved spatial reasoning tasks. The reasoner examples 122 may further comprise manually annotated solutions and explanations of a solved spatial reasoning task.

In examples where reasoner agent 102 is configured to write code to utilize external tools, even with adequate context, reasoner LLM 108 (as well as retriever LLM 130, discussed below), may not successfully write executable code in a single attempt. Thus, in some examples, reasoner prompt 106 further comprises error prevention mechanism 124. Error prevention mechanism 124 is configured to detect errors in code written by the reasoner LLM 108. Error prevention mechanism 124 can be configured to check for errors before and/or after code execution in various examples. As one example, the error prevention mechanism 124 can comprise a self-debugging mechanism 126. The self-debugging mechanism 126 can catch errors in code by prompting a review of the code execution attempts. The self-debugging mechanism 126 can be configured to review code execution attempts and code execution outcomes for execution errors, and to instruct reasoner LLM 108 to correct errors in the code. If the code execution is successful, the self-debugging mechanism 126 may terminate.

As another example, alternatively or additionally, the error prevention mechanism 124 can comprise an assumption removal mechanism 128. For example, in the execution of a spatial reasoning task, reasoner LLM 108 may hallucinate about scene information without actually issuing a query to the retriever agent 104 for the scene information. To address this, the assumption removal mechanism 128 instructs the reasoner LLM 108 to review and identify code comments in code written by the reasoner LLM 108 for one or more code comments comprising a keyword indicative of an assumption. The keyword can comprise, for example, keywords such as "assuming" or "assume". The assumption removal mechanism 128 further prompts the reasoner LLM 108 to remove the assumption from the code based on the code comments, and generate revised code. The assumption removal mechanism 128 can repeat this operation until no assumptions are found in comments from code generated by the reasoner LLM 108. In this manner, assumptions can be removed from code generated by reasoner LLM 108, thereby helping to avoid hallucinations. Such error prevention mechanisms can increase the success rate for performing a spatial reasoning task compared to implementations that lack the error protection mechanisms. Retriever agent 104 can utilize similar error prevention mechanisms, as discussed below.

An initial reasoner prompt 106 (e.g. a system message) issued to the reasoner LLM 108 can be implemented using any suitable textual form. An example of an initial reasoner prompt used to provide instructions and/or context is as follows in italics.

*You are a planning agent that is excellent at collaboration and code writing.*

*Given the environment description, schema of the graph representation of*

*that environment, a retriever agent that can retrieve information from the*

*graph, and a set of user defined reasoning tool(s), you know what information to ask from the retriever and how to use them as well as the reasoning tool(s) to solve a planning task. Then you can generate a plan executable by the agent to achieve the given mission.*

*Environment Description:*

*[\*The env has multiple rooms, doors connecting rooms, and items...*

*\*To open a closed door, the agent needs a key of the same color...]*

*Schema of Scene Data*

*[Node attributes:*

  *-"types": String.["room", "agent",...*

  *-"color": String.*

  *-"coordinate":...*

*Edges:*

  *-Doors are linked to connected doors.*

  *-Rooms are linked to items within ...]*

*Agent Actions:*

*[\*pickup(ITEM_NODE_ID): Move to the item location and pick up the item.*

*\*open(DOOR_NODE_ID)... ]*

*Please follow the guidance below:*

*\* Solve tasks step-by-step. Figure out the next step that can help you get closer to the solution.*

*\* If you need any information from the graph based on the graph schema, raise a language query. A retriever will return the information to you.*

*\* If you have enough information to solve the next substep, use your reasoning and code writing skill to solve it. If you write code, print out the result with succinct explanation. The code execution output will be sent back to you.*

*\* You might be provided with reasoning tools. They are a set of python functions for solving an atomic subproblem which might be helpful for your*

*task. Please use the tools whenever suitable. The annotation of the tools will be provided at the end of the guidance.*

*\* When asking the retriever for information:*

*- Raise language queries that are clear, self-contained, and addressable by traversing through the graph.*

*- Communicate using the terms in the graph schema.*

*- Please break questions into simpler queries and raise them one-by-one. Avoid asking for all necessary information at once.*

*\* When the task is solved, summarize the solution and reply 'TASK TERMINATE' in a separate paragraph. Do this ONLY when you obtain the complete solution.*

*\* Format your information query message in the following way:*

*[Explanation]*

*Explain why querying for the information.*

*[Query]*

*The information retrieval query to the retriever.*

*\* Format your code writing message in the following way:*

*[Explanation]*

*Explain what your code does.*

*[Code]*

*Python code that solves a subproblem. Wrap the code in the python code block.*

*\* Format your entire solution summary message in the following way:*

*[Summary]*

*Summarize the entire solving process.*

*[Actions]*

*[ACTION1, ACTION2, ... ]*

*TASK TERMINATE*

Following the initial reasoner prompt 106, task information 112 for the spatial reasoning task can be provided to the reasoner LLM 108. Further, at each subsequent iteration, a prompt history comprising past queries and retrieved information is included in the prompt as context to help determine a next response regarding the spatial reasoning task.

Upon input of initial reasoner prompt 106 and task information 112, reasoner LLM 108 can generate a query (e.g. a natural language query) for retriever agent 104. Retriever agent 104 then constructs a retriever prompt 132 and inputs the retriever prompt 132 into a generative language model, such as an LLM or SLM. Here, the retriever agent 104 includes a retriever LLM 130. The retriever LLM 130 may be a same LLM as the reasoner LLM 108, or a different LLM. Further, in other examples, a generative language model other than an LLM (e.g. an SLM) may be used.

The retriever prompt 132 includes the query 133 from the reasoner agent 102. Query 133 can comprise a request for scene data from reasoner LLM 108 for solving a step of the spatial reasoning task. For example, where the spatial reasoning task is to "pick up the red box", query 133 may be a RoomID for a task-relevant item, such as "what is the RoomID where the red box is located?"

Retriever prompt 132 further includes schema of scene data 110. As described above, schema of scene data 110 is textual in format, and describes the types, format, and semantics of the scene information available for solving the spatial reasoning task. Schema of scene data 110 guides retriever LLM 130 in writing information retrieval code to retrieve information related to query 133. Schema of scene data 110 may be a schema of a scene graph. In other examples, schema of scene data 110 may be a schema of a database, or a schema of another data structure storing scene data.

Retriever prompt 132 also comprises environment description 114. As described above, environment description 114 can comprise a spatial description of the environment relevant to performing the spatial reasoning task, such as whether the environment contains multiple rooms or doors, whether a key is needed to open doors, etc. Retriever prompt 132 also comprises guidance 134 for the retriever LLM 130. Guidance 134 is textual instruction that defines behaviors and formats for retriever LLM 130. For example, guidance 134 can comprise instructions for retriever LLM 130 to write code in a specified programming language (e.g. Python, SQL, etc.) to retrieve information from scene data according to the schema of scene data 110. However, retriever prompt 132 does not comprise a prompt history. Instead, only the current query 133 is included in the retriever prompt 132. Past conversation and analyses are filtered out (by reasoner agent 102 and/or by retriever agent 104) in order to prevent retriever LLM 130 from attempting to realize all plan steps at once while omitting actual desired information, as this can produce erroneous results.

Retriever prompt 132 further can comprise an error prevention mechanism 140. Error prevention mechanism can comprise a self-debugging mechanism 141. As described above, error prevention mechanism 140 can be configured to check for errors in code execution. Self-debugging mechanism 41 can catch errors in code by prompting a review of code execution attempts. Self-debugging mechanism 141 can be configured to review code execution attempts and code execution outcomes for execution errors. Other error checking also can be included in retriever agent 104.

Retriever prompt 132 can have any suitable textual form. An example of retriever prompt 132 is shown in italics below.

*You are an excellent graph information retrieval agent. Given the environment description and the schema of the graph representation of the environment, you are good at writing code to obtain information from a graph following language queries.*

*Environment Description:*

*[\*The env has multiple rooms, doors connecting rooms, and items…*

*\*To open a closed door, the agent needs a key of the same color…]*

*Schema of Scene Data*

*[Node attributes:*

> *- "types": String.["room", "agent",…*

> *- "color": String.*

> *- "coordinate":…*

*Edges:*

> *-Doors are linked to connected doors.*

> *-Rooms are lined to items within …]*

*Query:*

*[\*What is the roomID where the agent is located?*

*\*What is its coordinate and size?]*

*Please follow the guidance below:*

*\* Please write python code to retrieve information from the graph. Please include node id in your result and print out the result in your code.*

*\* If there is no required information stored in the graph, print None in your code. \* The code execution result will be sent back to you. Please check the result. If the information is retrieved, summarize the information and replay 'INFO RETRIEVED' in a separate paragraph following the format below:*

> *[Summary] Summarize the required information*

> *INFO RETRIEVED*

Returning to FIG. 1, in response to receiving retriever prompt 132, retriever LLM 130 can write code to generate a query to query scene data 142. Results of the query are sent as text-based query results from the retriever agent 104 to the reasoner agent 102. Where the scene data is a scene graph, the results can comprise a portion of scene data (e.g. nodes and/or edges within a scene graph) relevant to the query, and/or attributes of a particular node of the scene graph (e.g.,

referring to the red box example above, a RoomID for a room in which the red box is located). The results can then be used by reasoner agent 102 to determine a next step to take. The term "step" refers to any next action taken by the reasoner agent in furtherance of determining a solution to the spatial reasoning problem. To do so, reasoner agent 102 constructs a next prompt including results of the query and prompts reasoner LLM 108. Reasoner LLM 108 can reason over the query results, which comprise a portion of scene data 142, and determine a next step to take in solving the spatial reasoning task.

Reasoner LLM 108 may generate a new query to send to the retriever agent 104 for the retrieval of additional scene data, or generate code to use an external tool to perform an operation. For example, reasoner LLM 108 may generate code to use an external tool to traverse a space or move an object in space. If reasoner LLM 108 generates another query, reasoner agent 102 sends the query to retriever agent 104, retriever LLM again queries scene data 142, and the one or more query results are again sent to reasoner agent 102. The process then may iterate as described above until the spatial reasoning task is solved, upon which reasoner LLM 108 outputs a solution 144. Solution 144 can comprise, for example, a list of actions an agent can take to perform the spatial reasoning task. As mentioned above, the cooperative interactions of reasoning agent 102 and retrieval agent 104 can help to ensure that reasoner LLM 108 and retriever LLM 130 focus on information selectively aligned with the task solving process, and that the reasoning process is grounded in the scene data by factoring in retrieved scene information. This can help to accurately solve the spatial reasoning process in fewer computing cycles than other methods (for example, method which input an entire scene graph in textual form with each prompt), while avoiding hallucinations that can arise from using a textual scene graph in a prompt.

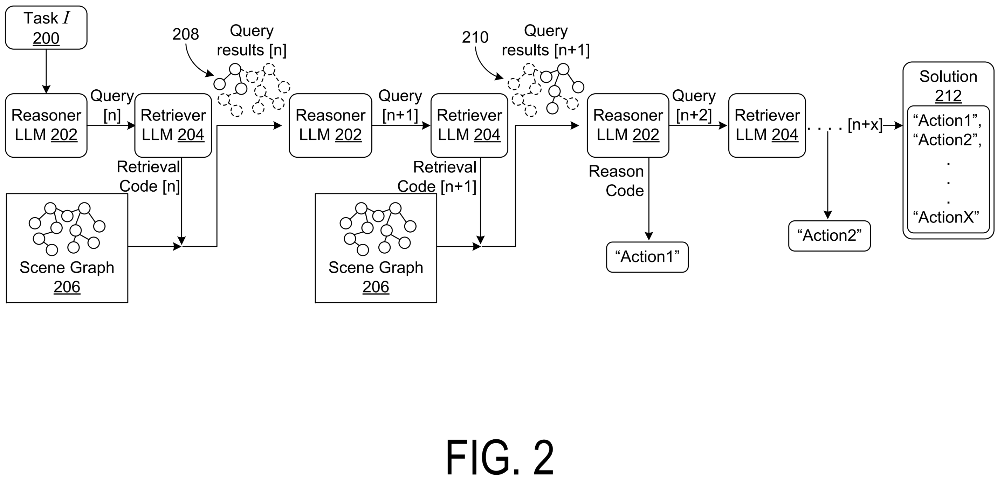

FIG. 2 schematically shows an example process flow demonstrating the interleaved nature of the reasoning and retrieval phases of FIG. 1. The process flow proceeds from left to right. First, given a spatial reasoning task *I* 200, reasoner LLM 202 generates a query [n] and sends the query [n] to retriever LLM 204. Reasoner LLM 202 and retriever LLM 204 are examples respectively of reasoner LLM 108 and retriever LLM 130. Retriever LLM 204 then sends a query [n] in the form of retrieval code [n] to query a scene graph 206, schematically represented as nodes and edges, for relevant information regarding the spatial reasoning task. Query results [n] 208, comprising relevant spatial information, are schematically shown as the bolded nodes and edges of scene graph 206. Only the portion of scene graph 206 relevant to the query [n] is returned to reasoner LLM 202. In various examples, the query results may comprise one or more subsets of nodes and edges of the scene graph, an entire node and/or edge of the scene graph, or a subset of attributes of nodes and/or edges of the scene graph (e.g. one or more values). Once the query results [n] are received, reasoner LLM 202 reasons over the relevant spatial information. Reasoning over only the portion of scene graph 206 comprised in query results [n] reduces the risk of hallucination by the reasoner LLM, as opposed to reasoning over the entirety of scene graph 206. Reasoner LLM 202 then generates a next query [n+1] to retriever LLM 204. Retriever LLM 204 receives the query [n+1], and sends another query [n+1] in the form of retrieval code [n+1] to query scene graph 206. As schematically shown by bolded nodes and edges, in this iteration, query results [n+1] 210 comprise a different portion of scene graph 206 than query results [n] 208. Query results [n+1] are sent to reasoner LLM 202, which ingests the relevant spatial information and generates a first action, "Action1", for an agent to take in the execution of the spatial reasoning task. To generate a next action, reasoner LLM 202 generates another query [n+2] to retriever LLM 204 for further spatial information to eventually inform a next action, "Action2". The process can iterate until a solution 212 is reached. As shown, solution 212 comprises a list of actions for the agent to take to execute the spatial reasoning task.

The interleaved reasoning and retrieval process described above can be implemented to execute spatial reasoning tasks in a variety of environments. For example, this process can be implemented in an autonomous agent (e.g. a software agent or a hardware agent, such as a robot) tasked to solve a spatial reasoning task in a 2-dimensional (2D) virtual environment, or 3-dimensional (3D) virtual or real environments for which structured scene data (e.g. in the form of a scene graph, database, or other suitable data structure) and a schema for the structured scene data is available.

Examples of the above-described method, in which an LLM was used as the generative language model, were tested in a 2D grid world environment (BabyAI, Maxime Chevalier-Boisvert, Dzmitry Bahdanau, Salem Lahlou, Lucas Willems, Chitwan Saharia, Thien Huu Nguyen, and Yoshua Bengio. Babyai: A platform to study the sample efficiency of grounded language learning. arXiv preprint arXiv:1810. 08272, 2018*)* and a 3D environment (VirtualHome, Xavier Puig, Kevin Ra, Marko Boben, Jiaman Li, Tingwu Wang, Sanja Fidler, and Antonio Torralba. Virtualhome: Simulating household activities via programs. In Proceedings of the IEEE conference on computer vision and pattern recognition, pp. 8494-8502, 2018*).*

The example method was evaluated on a series of numerical Q&A (NumQ&A) and planning tasks within the BabyAI (Maxime Chevalier-Boisvert, Dzmitry Bahdanau, Salem Lahlou, Lucas Willems, Chitwan Saharia, Thien Huu Nguyen, and Yoshua Bengio. Babyai: A platform to study the sample efficiency of grounded language learning. arXiv preprint arXiv:1810.08272, 2018) and VirtualHome (VH) (Xavier Puig, Kevin Ra, Marko Boben, Jiaman Li, Tingwu Wang, Sanja Fidler, and Antonio Torralba. Virtualhome: Simulating household activities via programs. In Proceedings of the IEEE conference on computer vision and pattern recognition, pp. 8494-8502, 2018.) environments. For each environment, a single scene graph schema and environment description that was consistent across all tasks for that environment was provided. The method generated solutions grounded in different scene graph instance inputs for each experiment. Each task in these experiments required reasoning on both the spatial structure and the semantic information encoded in the scene graph. The success rate is used as an evaluation metric, where success is defined as either providing the correct answer or achieving the desired outcome in the simulation. GPT-4o, offered by OpenAI of San Francisco, CA, was used as the generative language model. The methods tested were implemented using AutoGen, which can be accessed at https://github.com/microsoft/autogen. AutoGen is an open-source framework which allows developers to build LLM applications via multiple agents that can converse with each other to accomplish tasks. See, e.g., *Qingyun Wu, Gagan Bansal, Jieyu Zhang,* Yiran Wu, Shaokun Zhang, Erkang Zhu, Beibin Li, Li Jiang, Xiaoyun Zhang, and Chi Wang. Autogen: Enabling next-gen llm applications via multi-agent conversation framework. arXiv preprint arXiv:2308.08155, 2023.

The problem setting for the spatial reasoning tasks tested in these experiments comprises a natural language task instruction $I$, and a scene graph $G = (V, E)$, wherein $V$ and $E$ denote vertices and edges of the scene graph, respectively. Each node $V_i$ represents an object along with its attributes, such as coordinates or colors, while each edge indicates a type of spatial relationship, such as inside or on top of. Additionally, the problem setting assumes access to a scene graph schema S, which is, as described above, a textual description of vertex, edge, and attribute types, formats, and semantics. The objective is to generate the solution of the task instruction I using LLMs, based on the available information described above. The solution can be expressed as follows.

$$A = f( I, G, S; LLMs) \qquad\qquad (1)$$

A reasoner agent, such as the reasoner agent 102 described above, analyzes the task $I$ and graph schema S and generates a first analysis. The first analysis is denoted as $a_0$. The reasoner sends out the first associated information retrieval query, designated as $q_0$, to a retriever agent (such as retriever agent 104 described above) to access the scene graph information. At the $t^{th}$ round of conversation, the reasoner agent consumes the conversation history, which includes past information retrieval queries, retrieved information, and the past analyses: $\{(q_0, G'_0, a_0), .... ,(q_{t-1}, G'_{t-1}, a_{t-1}), (q_t, G_t)\}$. The reasoner agent then generates the next corresponding analysis at and query $q_t$, where $a_t$ involves intermediate conclusions and the next subtask to be solved, which informs and justifies $q_t$. In this way, each reasoning step is grounded to the environment by factoring in the retrieved information, and the graph data processed by LLMs is filtered by the reasoning.

As mentioned above, the retriever agent assists the reasoner agent by processing queries and returning the requested information from the scene graph. Given a free-form language query q, the retriever agent generates code that executes on the scene graph to retrieve the relevant subgraph containing the required information $G' = (V', E') = h(G)$. Here, $V'$ and $E'$ denote subsets of graph nodes and edges, respectively. While the reasoner agent may query for either the entire node or edge or just a subset of their attributes, $V'$ and $E'$ are used as a general representation for either case. As discussed above, the prompt for both the reasoner LLM and retriever LLM includes the environment description, the scene graph schema S, and general guidance. The key difference is that S guides the retriever LLM in writing information retrieval code. Confusion is avoided by ensuring that both agents communicate using the same terms from the schema.

The disclosed examples that were tested were compared against several direct reasoning methods based on whole graph prompting. These methods include three zero-shot approaches: zero-shot prompting (ZERO-SHOT), Zero-Shot Chain-of-Thought (0-COT) (Takeshi Kojima, Shixiang Shane Gu, Machel Reid, Yutaka Matsuo, and Yusuke Iwasawa. Large language models are zero-shot reasoners. Advances in neural information processing systems, 35: 22199-22213, 2022*), and* Least-to-Most (LTM) (Denny Zhou, Nathanael Schärli, Le Hou, Jason Wei, Nathan Scales, Xuezhi Wang, Dale Schuurmans, Claire Cui, Olivier Bousquet, Quoc Le, et al. Least-to-most prompting enables complex reasoning in large language models. arXiv preprint arXiv:2205.10625, 2022*).*

The tested examples were also compared to three few-shot methods: Chain-of-Thought (COT) (Jason Wei, Xuezhi Wang, Dale Schuurmans, Maarten Bosma, Fei Xia, Ed Chi, Quoc V Le, Denny Zhou, et al. Chain-of-thought prompting elicits reasoning in large language models. Advances in neural information processing systems, 35:24824-24837, 2022*),* Build-a-Graph (BAG) (Heng Wang, Shangbin Feng, Tianxing He, Zhaoxuan Tan, Xiaochuang Han, and Yulia Tsvetkov. Can language models solve graph problems in natural language? In Thirty-seventh Conference on Neural Information Processing Systems, 2023. URL https://openreview.net/forum? id=UDqHhbqYJV*),* and Algorithmic Prompting (ALGORITHM) (*Wang et al., 2023*). In addition to the few-shot examples, ALGORITHM also requires a language description of the task solving method. Further, the process also is compared with SayPlan (Krishan Rana, Jesse Haviland, Sourav Garg, Jad Abou-Chakra, Ian Reid, and Niko Suenderhauf. Sayplan: Grounding large language models using 3d scene graphs for scalable task planning. In 7th Annual Conference on Robot Learning, 2023. URL https://openreview.net/forum? id=wMpOMO0Ss7a*),* a retrieve-then-reason method specifically designed for multi-room scene graphs. Results for this comparison are shown in Table 1 below. The process is further compared against ReAct (Yao, Shunyu, et al. "React: Synergizing reasoning and acting in language models." arXiv preprint arXiv:2210.03629 (2022*)),* an iterative reason and retrieve process for a generic data source implemented in a single agent. Results for this comparison are shown in Table 2.

The performance of the method as described herein is investigated in both zero-shot and few-shot settings. For the latter, two few-shot versions of the interleaved reasoning and retrieval process are introduced, denoted as Reason-while-Retrieve-Scene Graph + Few Shot (RwR-SG-FS). These versions incorporate additional in-context learning examples for the reasoner LLM, and Reason-while-Retrieve-Scene Graph + Algorithm (RwR-SG-A), which adds both in-context examples and algorithmic prompts to the reasoner LLM. Although this process involves dialogue between two agents, neither agent is provided with detailed conversation examples, as these can be impractical to collect and may constrain the reasoning flexibility of LLMs. This investigation can evaluate whether the disclosed process can leverage task-level examples to enhance its reasoning capacity.

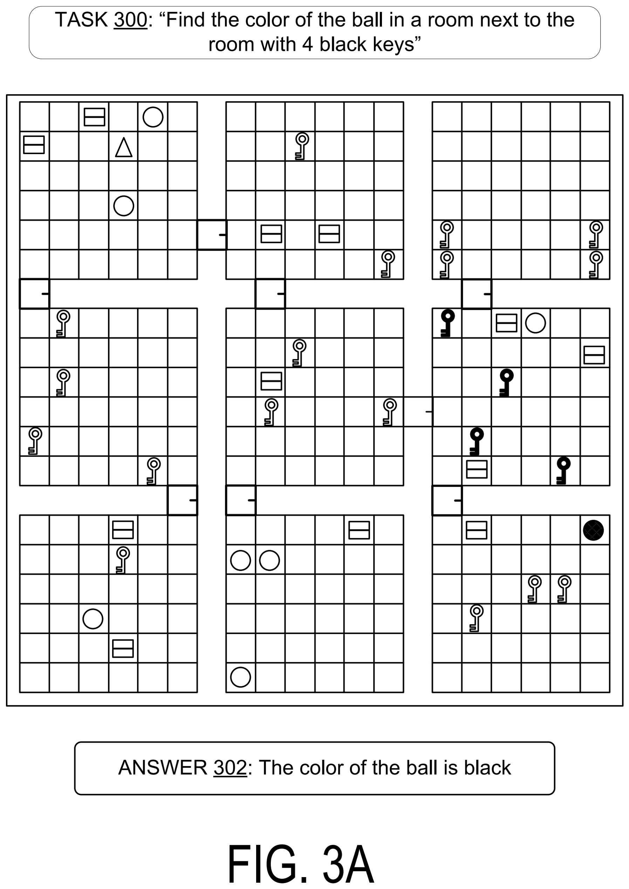

The first investigation was performed on a numerical Q&A task. The task environment was a customized 9-room 2D BabyAI environment. Inspired by the complex search questions designed in SayPlan, the following question template is designed: *find the color of the {TARGET_OBJECT} in a room next to the room with {NUM_IDENTIFIER} {COLOR_IDENTIFIER} {IDENTIFIER_OBJECT}*, where contents in curly brackets are populated based on each new environment instance. An example of this 9-room environment is shown in FIG. 3A. As shown, different components, such as balls, keys, and boxes, are arranged in each room. The rooms are separated by doors, which may require keys. Components in FIG. 3A are presented in black and white; however, different colors may be used. In this example, the task 300 comprises "Find the color of the ball in a room next to the room with 4 black keys." As mentioned above, the method is evaluated as successful if the correct answer is given-in this case, the answer 302 comprises "The color of the ball is black."

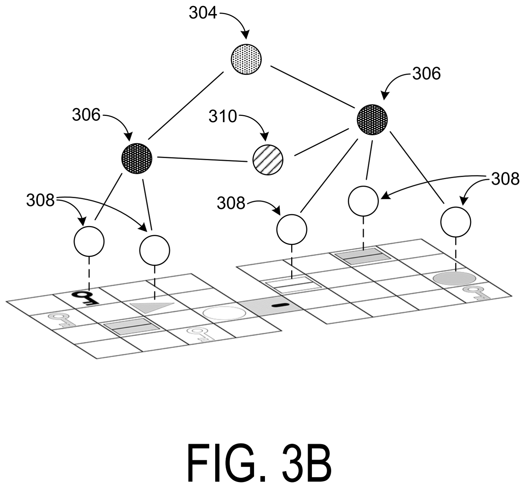

The environment and question pairs were designed to ensure that each pair has only one answer. Each method was tested in one hundred different environment and task instances. For few-shot methods, two instances were sampled and the solution and the explanation was manually annotated as the in-context learning prompt. FIG. 3B shows an example of a scene graph representation of the environment. This representation was generated following the hierarchical graph design from 3DSG (Iro Armeni, Zhi-Yang He, JunYoung Gwak, Amir R Zamir, Martin Fischer, Jitendra Malik, and Silvio Savarese. 3d scene graph: A structure for unified semantics, 3d space, and camera. In Proceedings of the IEEE/CVF international conference on computer vision, pp. 5664-5673, 2019). The example scene graph shown in FIG. 3B represents the spatial scene layout through three levels: root 304, rooms 306, and objects 308, with additional door nodes 310 connecting room pairs.

Traversal planning tasks were also tested in BabyAI, where the task is to generate a sequence of node-centric actions to pick up a target item. Three atomic actions are designed as example external tools, including

(1) pickup(nodeID): Walk to and pickup an object specified by the node ID;
(2) remove(nodeID): Walk to and remove an object specified by the node ID;
(3) open(nodeID): Walk to and open a door specified by the node ID.

All baseline processes and the interleaved reasoning and retrieval processes are directly queried to generate the actions in the format above. The traversal planning task is tested in two related double-room environments, both of which require an agent to pick up a key of the correct color to unlock a door, remove any obstacle that blocks the door, open the door, and pick up the target. The difference is that the first environment, Trv-1, contains only the agent-side obstacle, whereas the second environment, dubbed Trv-2, contains another target-side obstacle. In-context examples are only generated in Trv-1, to test if the methods can extrapolate to Trv-2.

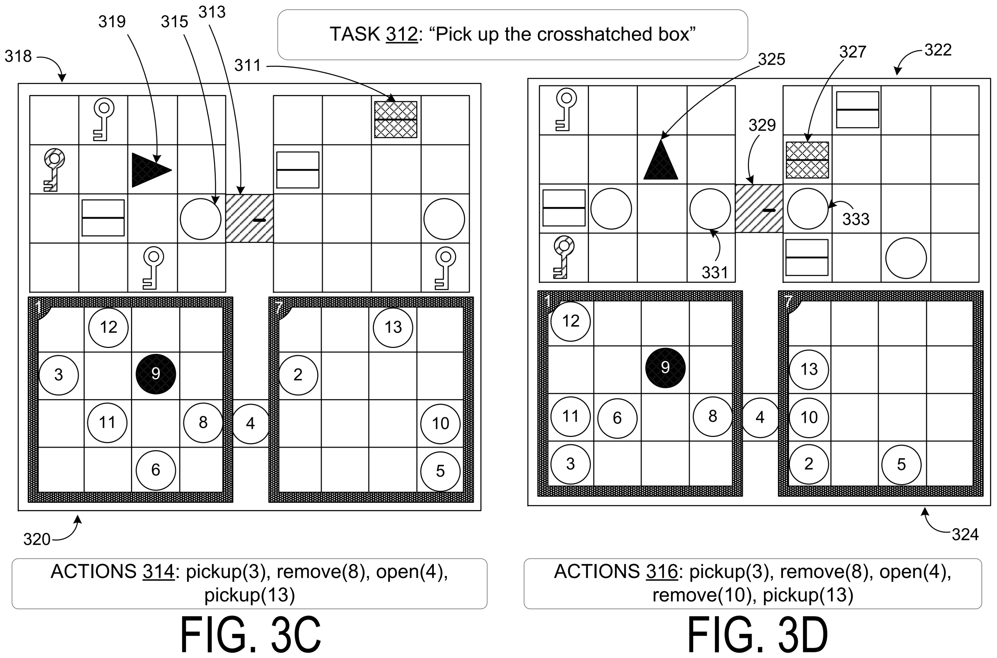

Examples of the two related double-room environments are shown in FIGS. 3C-3D. First, FIG. 3C shows an example Trv-1 environment 318. A corresponding scene layout 320 denoting rooms, objects, and doors is shown below the example environment. Environment 318 comprises an agent 319, denoted as a black triangle and as a corresponding node 9 in scene layout 320, and various objects. Among the objects, a crosshatched box is shown 311, along with corresponding node 13. A door 313 connecting the rooms is denoted by a striped box and corresponding door node 4. For task 312, "Pick up the crosshatched box," Trv-1 environment 318 comprises only one obstacle positioned between the agent and the crosshatched box. The obstacle is shown as a white circle 315 in environment 318, and as corresponding node 8 in the scene layout 320. As mentioned above, the methods are evaluated on whether the correct series of actions is produced for each environment. Successful execution of task 312 comprises a series of actions 314, comprising: *pickup(3), remove(8), open(4), pickup(13)*.

FIG. 3D shows an example Trv-2 environment 322, and corresponding scene layout 324 below the example environment. The Trv-2 environment 322 comprises an agent 325, denoted as a black triangle and as a corresponding node 9 in scene layout 324, and various objects. Among the objects, a crosshatched box 327 is shown with corresponding node 13. A door 329 connecting the rooms is denoted by a striped box and corresponding door node 4. Given task 312 of "pick up the crosshatched box", the methods disclosed above were evaluated on whether a correct answer was produced. However, in contrast to environment 318, to complete this task, the agent has to overcome two obstacles 331, 333. Each obstacle is denoted as a white circle in environment 322 and as respective nodes 8 and 10 in scene layout 324. In the case of environment 322, the correct answer is a series of actions 316, comprising: *pickup(3), remove(8), open(4), remove(10), pickup(13)*. As shown, actions 316 include a second obstacle removal step that the agent can take to execute task 312.

As before, each method was evaluated one hundred times in different instance of both types of the environment.

For the interleaved reasoning and retrieval process, the reasoning function *traversal room* was provided as an external tool, programmed based on an A* algorithm, which identifies the item to remove in order to reach from an initial to a desired location within the same room. As described below, the interleaved reasoning and retrieval process was able to leverage this external tool to compensate for the limited mathematical problem solving ability of LLMs.

Results of the NumQ&A, Trv-1, and Trv-2 tasks shown in FIGS. 3A, 3C, and 3D and described above are collected in Table 1, shown below. The interleaved reasoning and retrieval process described herein is denoted as Reason-while-Retrieve-Scene Graph (RwR-SG). A version of the process trained on few-shot in-context examples is denoted as RwR-SG+FewShot (RwR-SG-FS) and version trained on both in-context examples and algorithmic prompts is denoted as RwR-SG+Algorithm (RwR-A):

**TABLE 1**

| Task | Zero-Shot | | | | Few-Shot | | | | | |
|---|---|---|---|---|---|---|---|---|---|---|
| | ZeroShot | 0-CoT | LTM | **RwR-SG** | CoT | BAG | Alg | SayPlan | **RwR-SG-FS** | **RwR-SG-A** |
| NumQ&A | 55% | 48% | 52% | **95%** | 45% | 51% | 65% | 35% | | |
| Trv-1(seen) | 20% | 23% | 17% | **61%** | 34% | 35% | **64%** | 18% | **67%** | **64%** |
| Trv-2(unseen) | 11% | 7% | 6% | **56%** | 1% | 1% | 0% | 0% | **61%** | **56%** |

The zero-shot version of the disclosed method, RwR-SG, outperformed the best baseline by 30 percentage points (pp), even though it did not take the advantage of the few-shot examples. In this task, few-shot methods did not show significant advantage over zero-shot methods. All methods included in Table 1 could reason correctly on this problem, but tended to make mistakes when addressing the substeps such as counting the item or locating the neighboring rooms. The room-by-room graph traverse mechanism used in SayPlan further degraded the performance, as the relevance of the information to the task could not be determined without reasoning first. That is, the target neighboring room could not be identified without finding the identifier room first. In contrast, RwR-SG attended to the graph information in the correct order by querying for it based on the reasoning process.

Table 1 also reports the success rate for the above methods in two traversal environments. In the seen environment, the interleaved reasoning and retrieval process achieved 38pp and 3pp higher success rate against the best performing baselines under zero-shot and few-shot settings, respectively. While few-shot baselines performed more than 10pp better compared to zero-shot baselines, the few-shot baselines performed worse in the unseen settings, achieving less than or equal to 1% success rate. This indicates that although few-shot examples helped improve the performance in the seen tasks, LLMs do not learn the reasoning process to extrapolate to similar unseen tasks. Rather, LLMs may memorize the heuristic mechanism that can help solve the same task, such as removing the item on the left of the door in this case. On the other hand, by separating out the retriever agent which handles the graph information, the reasoner agent learns the reasoning process from the few-shot examples that is essential for the task, and can thus extrapolate well to similar problems utilizing the knowledge. SayPlan achieved even inferior results compared to reason-only methods.

Few-shot results of the NumQ&A, Trv-1, and Trv-2 tasks compared against ReAct are shown below. To show the importance of the external programmatic tools in spatial reasoning, a variant of ReAct, named ReAct_Trv, whose action space includes the traversal_room function, was also tested.

**TABLE 2**

| Task | ReAct (FS) | React_trv (FS) | **RwR-FS-SG** |
|---|---|---|---|
| NumQ&A | 24% | 24% | **95%** |
| Trv-1 (seen) | 13% | 62% | **67%** |
| Trv-2 (unseen) | 0% | 56% | **61%** |

The disclosed method outperformed either ReAct variant in all three tasks. Notably, the interleaved reasoning and retrieval process outperformed ReAct in the NumQ&A task by over 70%. It was observed that on a task with a bigger scene graph (due to the larger environment), ReAct was less effective in finding task-relevant information. To address a simple query such as "which room contains 4 yellow balls", ReAct might need to call dozens of APIs to aggregate information from the graph. On the other hand, the disclosed method might need one round of retrieval query, as it is able to directly filter on the spatial relationships conveyed through the graph structure. Moreover, when solving the reasoning step such as "find the neighbor rooms of the room XX", ReAct might attempt to generate the solution from the previously retrieved rooms, even though there might be more neighbors that have not been retrieved yet, leading to the wrong solution in some cases. The disclosed method is able to avoid this situation, as the retriever agent processes each query independent from previous conversations.

Another evaluation was performed in two VirtualHome (VH) environments, denoted as VH-1 and VH-2, respectively. Each of these was encoded as a built-in environment graph that naturally serves as the input to the disclosed example methods. Compared to BabyAI, VH environments are larger in scale in terms of the state space and action space. Both of these environments contain one hundred and fifteen object instances, eight relationship types encoded as edges in the graph, and multiple object properties and states that determine the executability of an action. As such, the VH environment is more challenging in terms of task-dependent information distillation. For each environment, ten household tasks are adopted from ProgPrompt (Ishika Singh, Valts Blukis, Arsalan Mousavian, Ankit Goyal, Danfei Xu, Jonathan Tremblay, Dieter Fox, Jesse Thomason, and Animesh Garg. Progprompt: Generating situated robot task plans using large language models. In 2023 IEEE International Conference on Robotics and Automation (ICRA), pp. 11523-11530. IEEE, 2023), such as *"put the soap in the bathroom cabinet",* and each method is queried for the action sequence to accomplish the task.

As before, each method was tasked with directly generating the plan in the VH action format. This format included *[action_name]<object_name>(object_id)* for one argument action, and *[action_name]<object_name1>(object_id1)<object_name2>(object_id2)* for two argument actions. Two of the tasks, together with the ground truth action sequences, served as the few-shot examples, whereas the other eight were for testing. To situate the task in the environment, CoELA (Hongxin Zhang, Weihua Du, Jiaming Shan, Qinhong Zhou, Yilun Du, Joshua B Tenenbaum, Tianmin Shu, and Chuang Gan. Building cooperative embodied agents modularly with large language models. In International Conference on Learning Representations, 2024) was followed to specify the task as the desired states. For example, the task of above was specified as *soap INSIDE bathroomcabinet.* To achieve the desired state, LLMs needed to reason over the current state of the environment in order to identify the sequence of actions that ultimately achieved the desired outcome. A plan was considered successful if the desired states are reached after simulation.

The planning success rates on the eight tasks in the 2 VH environments are shown in Table 3.

**TABLE 3**

| Method | Few-Shot Examples | VH-1 | VH-2 |
|---|---|---|---|
| **ZeroShot** | | 87.5% | 75% |
| **0-CoT** | | 87.5% | 75% |
| **LTM** | | 87.5% | 62.5% |
| **CoT** | ✓ | 87.5% | 75% |
| **BAG** | ✓ | 87.5% | 62.5% |
| **RwR-SG** | | **100%** | **100%** |

It can be observed that all baselines consistently failed to address the precondition of the planned action. For example, all of the baseline methods failed to generate *[open]<garbagecan> (ID)* before *[putin]<plum> (ID)<garbagecan>(ID),* forgetting that the state of the garbage can is *state: {CLOSED}* from the extensive graph input. On the other hand, the interleaved reasoning and retrieval process disclosed herein does not process the entire graph. Instead, queries are issued for specific object information, which helps to better determine the action parameter and examine the action preconditions.

FIG. 4 shows example actions and accompanying VH images for the execution of spatial reasoning task 400. Task 400 comprises "Put the soap in the bathroomcabinet". A reasoner agent-side conversation for this task can proceed as follows:

 *(a) Retrieve the node with the class_name "barsoap".*
 *(b) We have identified the bar soap with the details:*

 - *ID: 34*
 - *Class name: barsoap*
 - *Properties: ['GRABBABLE', 'MOVABLE', 'CREAM']*

 *(c) Retrieve the node with the class_name "bathroomcabinet:*

*(d) We have identified the bathroom cabinet with the details:*

- *ID: 26*
- *Class name: bathroomcabinet*
- *Properties: ['SURFACES', 'CAN_OPEN', 'CONTAINERS']*
- *States: ['CLOSED ']*

*(e) We need to open the bathroom cabinet (ID: 26) since it is closed.*

The reasoner agent may continue reasoning as demonstrated above until a series of actions 402 for solving task 400 are generated. As shown in FIG. 4, a first action 404 comprises [walk]<barsoap>(34), a second action 406 comprises [grab]<barsoap>(34), and a third action 408 comprises [walk]<bathroomcabinet>(26). A fourth action 410 and a fifth action 412 comprise [open]<bathroomcabinet>(26) and [putin]<barsoap>(34) <bathroomcabinet>(26), respectively. The accompanying VH images shown in FIG. 4 demonstrate the agent performing the actions 402 generated by the reasoner agent and thereby performing spatial reasoning task 400.

To further validate the design of the interleaved reasoning and retrieval process, an ablation study was conducted. To this end, two variants were introduced. The first variant is referred to as SingleCoder, which was a single LLM that directly writes the entire code to address a given task. The SingleCoder could benefit from the accurate numerical reasoning and tool-use capacity from the code-writing, but did not have the opportunity to analyze the intermediate graph information from the iterative retrieving and reasoning. The SingleCoder LLM was prompted with the combination of the information for both the reasoner LLM and the retriever LLM, including the environment and action space information, scene graph schema, and tool annotations. The self-debugging mechanism was also introduced. The second variant is referred to as RwR-SG_Text. This variant disabled the code-writing ability of both the retriever LLM and reasoner LLM. Instead, both cooperative agents relied purely on language reasoning and communication skill to solve a given task. The RwR-SG_Text design evaluated the performance of the iterative retrieve and reason process without the code-writing. This variant was only capable of generating plans in natural language. Hence, an additional action translator was added to convert the output to the executable action format, following prior works *(Chan Hee Song, Jiaman Wu, Clayton Washington, Brian M. Sadler, Wei-Lun Chao, and Yu Su. Llm-planner: Few-shot grounded planning for embodied agents with large language models. In International Conference on Computer Vision, October 2023; Wenlong Huang, Fei Xia, Dhruv Shah, Danny Driess, Andy Zeng, Yao Lu, Pete Florence, Igor Mordatch, Sergey Levine, Karol Hausman, et al. Grounded decoding: Guiding text generation with grounded models for robot control. arXiv preprint arXiv:2303.00855, 2023c).* Both variants were tested in BabyAI Trv-1 and Numerical Q&A tasks under the zero-shot setting.

The ablation study results are demonstrated in Table 4, shown below.

**TABLE 4**

| Method | Code-Writing & Tool-Use | *RwR-SG* process | Numerical Q&A | Trv-1 | Trv-2 |
|---|---|---|---|---|---|
| **SingleCoder** | ✓ | | 80% | 33% | 25% |
| **RwR-SG_Text** | | ✓ | 57% | 18% | 8% |
| **RwR-SG** | ✓ | ✓ | **95%** | **61%** | **56%** |

As shown, both variants impaired the effectiveness of the method. While the iterative task solving could better break the task down, a correct solution for each substep could not always be obtained without code-writing. For example, when queried with "Find all rooms that contain 5 green balls", the non-code-writing retriever LLM was not able to solve the counting problem and locate the correct room without code-writing. On the other hand, while SingleCoder was better at solving numerical problems, it was unable to address complex planning tasks without the iterative cooperation. By combining the advantage from both designs, the disclosed method achieves the best result over both variants and all baselines.

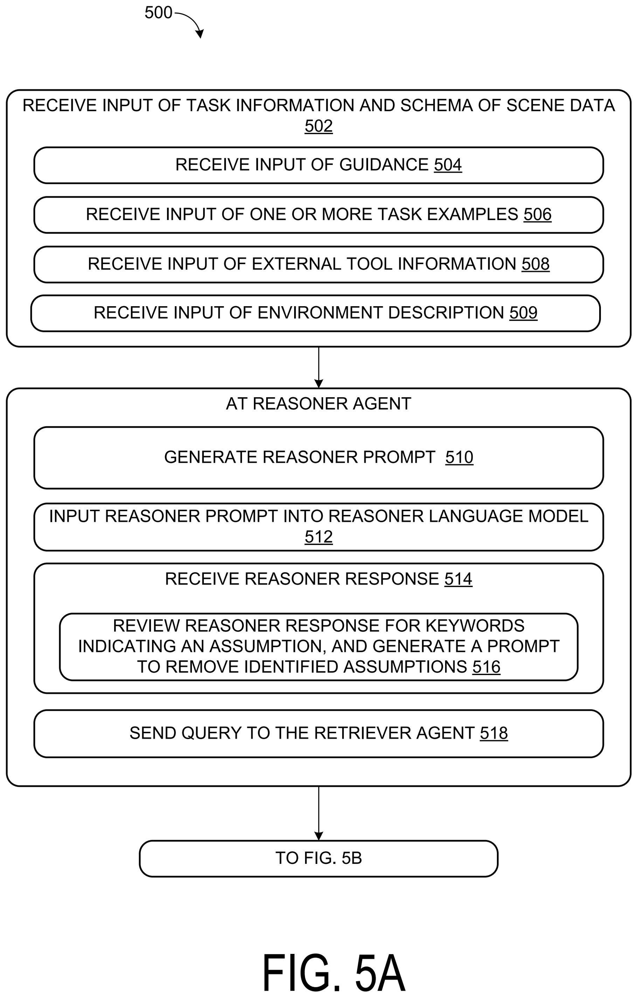

FIGS. 5A-5B schematically show a flow diagram for an example method 500 of performing a spatial reasoning task. Method 500 comprises, at 502, receiving input of task information and a schema of scene data. In some examples, method 500 further comprises receiving inputs of other information to help a generative language model reason the steps in a spatial reasoning task. For example, method 500 can comprise receiving an input of guidance 504, receiving an input of one or more task examples 506, receiving an input of external tool information 508, and/or receiving input of an environment description. Method 500 further comprises, at a reasoner agent, generating a reasoner prompt 510. The reasoner prompt 510 can include the information received at 502-508, and/or other information received as an input to help solve a spatial reasoning task.

Method 500 further comprises, at the reasoner agent, inputting the reasoner prompt into a reasoner language model 512, and receiving a reasoner response 514. As described above, the reasoner language model comprises a generative language model, such as a LLM or an SLM. In some examples, receiving the reasoner response 514 from the reasoner language model further comprises reviewing the reasoner response 514 for keywords indicating an assumption and generating a prompt to remove any identified assumptions 516. Method 500 further comprises sending a query from the reasoner agent to the retriever agent based upon the reasoner response 514.

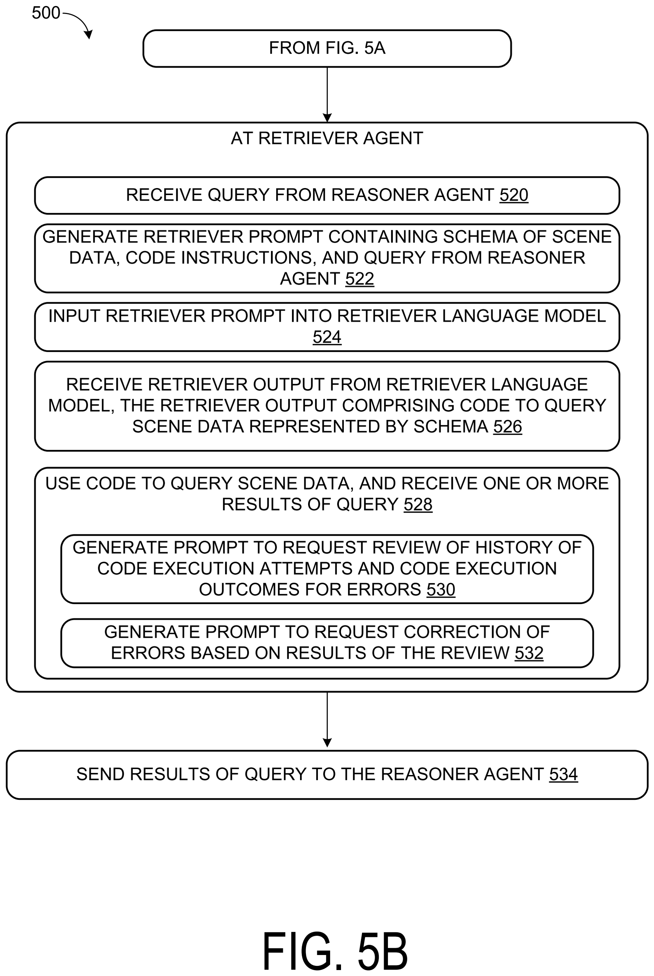

Continuing with FIG. 5B, method 500 further comprises, at the retriever agent, receiving the query from the retriever agent 520, and generating a retriever prompt containing the environment description, the schema of scene data, code instructions, and the query from the reasoner agent 522. The code instructions can instruct a retriever language model 524 how to construct code for performing the query received from the reasoner agent. Method 500 further comprises, at the retriever agent, inputting the retriever prompt into a retriever language model 524, and receiving the retriever output from the retriever language model, the retriever output comprising code representing a query to query the scene data represented by the schema of scene data 526. As mentioned above, the scene data can have any suitable structure, such as a graph or database structure. Method 500 further comprises, at the retriever agent, using the code to query the scene data, and receiving one or more results of the query 528. In some examples, querying the scene data using the code representing the query and receiving one or more results of the database query 528 further comprises generating a prompt to request a review of a history of code execution attempts and code execution outcomes for errors 530, and generating a prompt to request a correction of the errors based on results of the review 532. Method 500 further comprises sending one or more results of the query to the reasoner agent 534. The reasoner agent then can use the results of the query. In some examples, the reasoner agent can use the results of the query to determine a next step to take in solving the spatial reasoning problem.

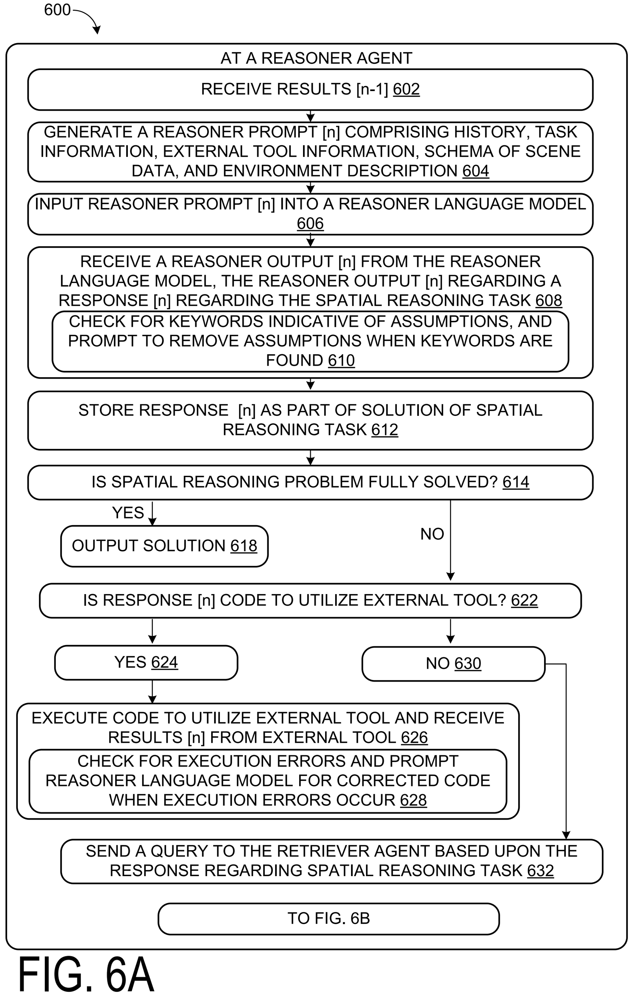

FIGS. 6A-6B schematically show a flow diagram for another example method 600 of performing a spatial reasoning task. At a reasoner agent, method 600 comprises receiving results [n-1] 602. Method 600 further comprises generating a reasoner prompt [n] comprising information such as a prompt history, task information, external tool information, a schema of scene data, and an environment description 604, and inputting the reasoner prompt [n] into a reasoner language model 606. Next, at the reasoner agent, method 600 comprises receiving a reasoner output [n] from the reasoner language model, the reasoner output [n] regarding a response [n] regarding the spatial reasoning task 608. In some examples, receiving the reasoner output [n] from the reasoner language model further comprises checking for keywords indicative of assumptions, and prompting to remove assumptions when keywords are found 610.

Next, at the reasoner agent, method 600 comprises storing response [n] as part of a solution to the spatial reasoning task 612. Further, it can be determined whether the spatial reasoning problem is fully solved 614. If it is determined at 614 that the spatial reasoning problem is fully solved, then the method 600 comprises outputting a solution 618. On the other hand, if it is determined at 614 that the spatial reasoning problem is not yet fully solved, then method 600 continues.

In examples where external tools are provided to reasoner agent, method 600 can comprise, at 622, determining whether response [n] is code to utilize an external tool 622. If the answer to question 622 is yes 624, the method 600 proceeds to executing code to utilize the external tool and receive results [n] from external tool 626. Further, in some examples, executing the code 626 comprises checking for execution errors and prompting the reasoner language model for corrected code when execution errors occur 628.

On the other hand, if response [n] is not code to utilize an external tool, then method 600 comprises sending a query to the retriever agent based upon the response regarding the spatial reasoning task 632.

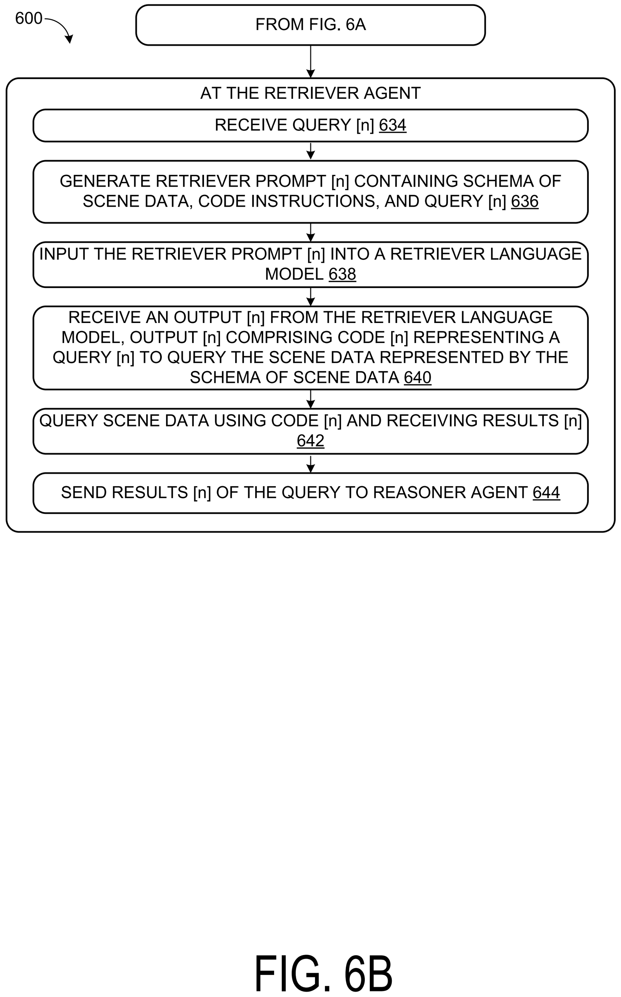

Referring next to FIG. 6B, at the retriever agent, method 600 comprises, at 634, receiving the query [n] from the reasoner agent. Method 600 further comprises, at 636, generating a retriever prompt [n] containing the environment description, the schema of scene data, code instructions, and the query [n], and at 638, inputting the retriever prompt [n] into a retriever language model. Continuing, method 600 further comprises, at 640, receiving an output [n] from the retriever language model, output [n] comprising code [n] representing a query [n] to query the scene data represented by the schema of scene data, and at 642, querying the schema of scene data using code [n] and receiving results [n]. Further, method 600 comprises sending results [n] of the query to the reasoner agent at 644. Method 600 iterates in this manner until a solution to the spatial reasoning problem is completed.

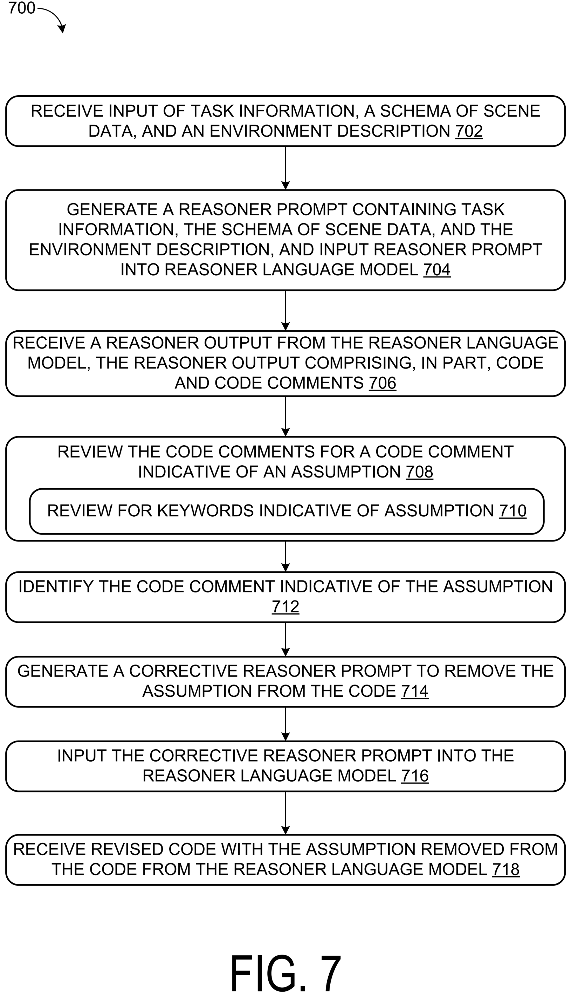

FIG. 7 schematically shows a flow diagram of an example method 700 for preventing errors while performing a spatial reasoning task. Method 700 comprises, at a reasoner agent, receiving input of task information, a schema of scene data, and an environment description at 702. As described above, other information also can be included in a reasoner prompt. Further, method 700 comprises, at 704, generating a reasoner prompt containing task information, the schema of scene data, and the environment description, and inputting the reasoner prompt into a reasoner language model 704. Method 700 additionally comprises, at the reasoner agent, receiving a reasoner output from the reasoner language model, the reasoner output comprising, in part, code and code comments at 706.

Continuing, method 700 comprises reviewing the code comments for a code comment indicative of an assumption at 708. In some examples, reviewing the code comments for a code comment indicative of an assumption comprises reviewing for keywords indicative of an assumption at 710. Example keywords include "assume" and "assuming". Method 700 further comprises, at 712, identifying the code comment indicative of the assumption, and at 714, generating a corrective reasoner prompt to remove the assumption from the code 714. Method 700 further comprises inputting the corrective reasoner prompt into the reasoner language model at 716, and receiving the revised code with the assumption removed from the code from the reasoner language model at 718.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 8 schematically shows a non-limiting embodiment of a computing system 800 that can enact one or more of the methods and processes described above. Computing system 800 is shown in simplified form. Computing system 800 may take the form of one or more personal computers, server computers, tablet computers, home-entertainment computers, network computing devices, gaming devices, mobile computing devices, mobile communication devices (e.g., smart phone), and/or other computing devices.

Computing system 800 includes a logic machine 802 and a storage machine 804. Computing system 800 may optionally include a display subsystem 806, input subsystem 808, communication subsystem 810, and/or other components not shown in FIG. 8.

Logic machine 802 includes one or more physical devices configured to execute instructions. For example, the logic machine 802 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine 802 may include one or more processors configured to execute software instructions. Additionally or alternatively, the logic machine 802 may include one or more hardware or firmware logic machines configured to execute hardware or firmware instructions. Processors of the logic machine 802 may be single-core or multi-core, and the instructions executed thereon may be configured for sequential, parallel, and/or distributed processing. Individual components of the logic machine 802 optionally may be distributed among two or more separate devices, which may be remotely located and/or configured for coordinated processing. Aspects of the logic machine 802 may be virtualized and executed by remotely accessible, networked computing devices configured in a cloud-computing configuration.

Storage machine 804 includes one or more physical devices configured to hold instructions executable by the logic machine 802 to implement the methods and processes described herein. When such methods and processes are implemented, the state of storage machine 804 may be transformed-e.g., to hold different data.

Storage machine 804 may include removable and/or built-in devices. Storage machine 804 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 804 may include volatile, nonvolatile, dynamic, static, read/write, read-only, random-access, sequential-access, location-addressable, file-addressable, and/or content-addressable devices.

It will be appreciated that storage machine 804 includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 802 and storage machine 804 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, display subsystem 806 may be used to present a visual representation of data held by storage machine 804. This visual representation may take the form of a graphical user interface (GUI). As the herein described methods and processes change the data held by the storage machine, and thus transform the state of the storage machine, the state of display subsystem 806 may likewise be transformed to visually represent changes in the underlying data. Display subsystem 806 may include one or more display devices utilizing virtually any type of technology. Such display devices may be combined with logic machine 802 and/or storage machine 804 in a shared enclosure, or such display devices may be peripheral display devices.

When included, input subsystem 808 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 810 may be configured to communicatively couple computing system 800 with one or more other computing devices. Communication subsystem 810 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 810 to send and/or receive messages to and/or from other devices via a network such as the Internet.

In another example, a computing system comprises a storage subsystem comprising one or more data storage devices and a logic system comprising one or more logic devices, wherein the storage subsystem comprises code executable by the logic subsystem to perform a spatial reasoning task by, at a reasoner agent, generating a reasoner prompt containing task information and a schema of scene data and inputting the reasoner prompt into a reasoner language model, receiving a reasoner response from the reasoner language model and sending a query to a retriever agent based upon the reasoner response; at the retriever agent, receiving the query from the reasoner agent, generating a retriever prompt containing the schema of the scene data and the query, and inputting the retriever prompt into a retriever language model, receiving a retriever output from the retriever language model, the retriever output comprising code representing a query to query scene data represented by the schema of the scene data, querying the scene data using the code representing the query and receiving one or more results of the query, and sending the one or more results of the query to the reasoner agent; and at the reasoner agent, using the one or more results of the query. In such an example, or any other examples, using the one or more results at the reasoner agent additionally or alternatively comprises generating a next reasoner prompt comprising the one or more results, inputting the next reasoner prompt into the reasoner language model, and receiving a next reasoner response. In any of the preceding examples, or any other examples, the next reasoner prompt additionally or alternatively comprises information regarding a tool executable to perform a corresponding task, and wherein the reasoner output comprising the next reasoner response comprises code for executing the tool. In any of the preceding examples, or any other examples, the code executable by the logic subsystem to perform the spatial reasoning task additionally or alternatively comprises a self-debugging mechanism, the self-debugging mechanism comprising, at one or more of the reasoner agent or the retriever agent, code executable to generate a prompt to request a review of a history of code execution attempts and code execution outcomes for errors, and code executable to generate a prompt to request a correction of the errors based on results of the review. In any of the preceding examples, or any other examples, the reasoner prompt additionally or alternatively comprises a reasoner prompt history, and the next reasoner prompt comprises a next reasoner prompt history. In any of the preceding examples, or any other examples, the retriever prompt additionally or alternatively does not include a prompt history. In any of the preceding examples, or any other examples, the reasoner language model and the retriever language model are a same language model. In any of the preceding examples, or any other examples, the code executable by the logic subsystem to perform the spatial reasoning task additionally or alternatively comprises an error prevention mechanism, the error prevention mechanism comprising, at the reasoner agent, code executable to generate a prompt to request a review of code comments for one or more keywords, the one or more keywords indicating one or more assumptions in the code, and code executable to generate a prompt to request a removal of the one or more assumptions. In any of the preceding examples, or any other examples, the reasoner prompt additionally or alternatively comprises one or more task examples. In any of the preceding examples, or any other examples, the reasoner prompt additionally or alternatively comprises an environment description.

In another example, a method of performing a spatial reasoning task comprises: iteratively, for an iteration [n], where n=1 to x, at a reasoner agent, receiving one or more query results [n-1] from a retriever agent, based upon the one or more query results [n-1], generating a reasoner prompt [n], the reasoner prompt [n] comprising a reasoner prompt history, task information, a schema of scene data, and an environment description, and inputting the reasoner prompt [n] into a reasoner language model, receiving a reasoner output [n] from the reasoner language model, the reasoner output [n] regarding a step [n] to take in performing the spatial reasoning task, and sending a query [n] to the retriever agent based upon the step [n] to take in performing the spatial reasoning task. The method further comprises: at the retriever agent, receiving the query [n] from the reasoner agent, generating a retriever prompt [n] containing the environment description, the schema of the scene data, and the query [n], and inputting the retriever prompt [n] into a retriever language model, receiving an output [n] from the retriever language model, the output [n] comprising code [n] representing a query [n] to query scene data represented by the schema of the scene data, querying the scene data using the code [n] and receiving one or more results [n] of the query, and sending the one or more results [n] of the query to the reasoner agent. In such an example, or any other example, the reasoner prompt [n] additionally or alternatively comprises information regarding one or more external tools useable to perform the spatial reasoning task. In any of the preceding examples, or any other examples, the retriever prompt additionally or alternatively does not include a prompt history. In any of the preceding examples, or any other examples, the schema of scene data additionally or alternatively further comprises information defining a format of a database. In any of the preceding examples, or any other examples, the reasoner language model and the retriever language model are a same language model. In any of the preceding examples, or any other examples, the reasoner language model and the retriever language model are two or more separate language models. In any of the preceding examples, or any other examples, the method additionally or alternatively comprises an error prevention mechanism, comprising, at the reasoner agent, generating a prompt to request a review of code comments for one or more keywords, the one or more keywords indicating one or more assumptions in the code, and generating a prompt to request a removal of the one or more assumptions.

In yet another example, a computing system comprises a storage subsystem comprising one or more data storage devices; and a logic subsystem comprising one or more logic devices, wherein the storage subsystem comprises code executable by the logic subsystem to prevent errors in the execution of a spatial reasoning task by: at a reasoner agent, receiving an input of task information a schema of scene data and an environment description, generating a reasoner prompt containing the task information, the schema of scene data and the environment description, and inputting the reasoner prompt into a reasoner language model, receiving a reasoner output from the reasoner language model, the reasoner output comprising, code and code comments, reviewing the code comments to identify a code comment indicative of an assumption, generating a corrective reasoner prompt to remove the identified assumption from the code, inputting the corrective reasoner prompt into the reasoner language model, and receiving revised code with the assumption removed from the code from the reasoner language model. In such an example, or any other example, reviewing the code comments additionally or alternatively comprises reviewing the code comments for one or more keywords in the code comments. In any of the preceding examples, or any other example, the code executable by the logic subsystem to prevent errors in the execution of the spatial reasoning task additionally or alternatively further comprises: at one or more of the reasoner agent or a retriever agent, instructions executable to review code comments for errors, and to prompt a correction of errors in the code.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A computing system (100) comprising:

   a storage subsystem comprising one or more data storage devices; and
   a logic subsystem comprising one or more logic devices, wherein the storage subsystem comprises code executable by the logic subsystem to perform a spatial reasoning task by:

   at a reasoner agent (102),

   generating a reasoner prompt (106) containing task information (112) and a schema of scene data (110), and inputting the reasoner prompt (106) into a reasoner language model (108),
   receiving a reasoner response from the reasoner language model (108), and
   sending a query (133) to a retriever agent (104) based upon the reasoner response;

   at the retriever agent (104),

   receiving the query (133) from the reasoner agent (102),
   generating a retriever prompt (132) containing the schema of the scene data (110) and the query (133), and inputting the retriever prompt (132) into a retriever language model (130),
   receiving a retriever output from the retriever language model (130), the retriever output comprising code representing a query to query scene data (142) represented by the schema of the scene data (110),
   querying the scene data (142) using the code representing the query and receiving one or more results of the query, and
   sending the one or more results of the query to the reasoner agent (102); and

   at the reasoner agent (102), using the one or more results of the query.

2. The computing system of claim 1, wherein using the one or more results at the reasoner agent comprises generating a next reasoner prompt comprising the one or more results, inputting the next reasoner prompt into the reasoner language model, and receiving a next reasoner response.

3. The computing system of claim 2, wherein the next reasoner prompt comprises information regarding a tool executable to perform a corresponding task, and wherein the reasoner output comprising the next reasoner response comprises code for executing the tool.

4. The computing system of claim 3, wherein the code executable by the logic subsystem to perform the spatial reasoning task further comprises a self-debugging mechanism, the self-debugging mechanism comprising, at one or more of the reasoner agent or the retriever agent,

    code executable to generate a prompt to request a review of a history of code execution attempts and code execution outcomes for errors, and
    code executable to generate a prompt to request a correction of the errors based on results of the review.

5. The computing system of any of claims 2 to 4, wherein the reasoner prompt comprises a reasoner prompt history, and wherein the next reasoner prompt comprises a next reasoner prompt history.

6. The computing system of any of claims 2 to 5, wherein the retriever prompt does not include a prompt history.

7. The computing system of any of claims claim 2 to 6, wherein the reasoner language model and the retriever language model are a same language model.

8. The computing system of any preceding claim, wherein the code executable by the logic subsystem to perform the spatial reasoning task further comprises an error prevention mechanism, the error prevention mechanism comprising, at the reasoner agent,

    code executable to generate a prompt to request a review of code comments for one or more keywords, the one or more keywords indicating one or more assumptions in the code, and
    code executable to generate a prompt to request a removal of the one or more assumptions.

9. The computing system of any preceding claim, wherein the reasoner prompt further comprises one or more task examples and/or an environment description.

10. A method of performing a spatial reasoning task, comprising:

    iteratively,
    for an iteration [n], where n=1 to x,

        at a reasoner agent (102),

            receiving one or more query results [n-1] from a retriever agent (104,
            based upon the one or more query results [n-1],
            generating a reasoner prompt [n] (106), the reasoner prompt [n] (106) comprising a reasoner prompt history (120), task information (112), a schema of scene data (110), and an environment description (114), and inputting the reasoner prompt [n] (106) into a reasoner language model (108),
            receiving a reasoner output [n] from the reasoner language model (108), the reasoner output [n] regarding a step [n] to take in performing the spatial reasoning task, and
            sending a query [n] to the retriever agent (104) based upon the step [n] to take in performing the spatial reasoning task;

        at the retriever agent (104),

            receiving the query [n] from the reasoner agent (102),
            generating a retriever prompt [n] (132) containing the environment description (114), the schema of the scene data (110), and the query [n], and inputting the retriever prompt [n] (132) into a retriever language model (130),
            receiving an output [n] from the retriever language model (130), the output [n] comprising code [n] representing a query [n] to query scene data (142) represented by the schema of the scene data (110),

querying the scene data (142) using the code [n] and receiving one or more results [n] of the query, and sending the one or more results [n] of the query to the reasoner agent (102).

11. The method of claim 10, wherein the reasoner prompt [n] further comprises information regarding one or more external tools useable to perform the spatial reasoning task.

12. The method of claim 10 or claim 11, wherein the schema of scene data further comprises information defining a format of a database.

13. The method of any of claims 10 to 12, wherein the reasoner language model and the retriever language model are: a same language model, or two or more separate language models.

14. The method of any of claims 10 to 13, further comprising an error prevention mechanism, comprising, at the reasoner agent,

generating a prompt to request a review of code comments for one or more keywords, the one or more keywords indicating one or more assumptions in the code, and
generating a prompt to request a removal of the one or more assumptions.

15. A computing system (100) comprising:

a storage subsystem comprising one or more data storage devices; and
a logic subsystem comprising one or more logic devices, wherein the storage subsystem comprises code executable by the logic subsystem to prevent errors in execution of a spatial reasoning task by:
at a reasoner agent (102),

receiving an input of task information (112), a schema of scene data (112), and an environment description (114),
generating a reasoner prompt (106) containing the task information (112), the schema of scene data (110), and the environment description (114), and inputting the reasoner prompt (106) into a reasoner language model (108),
receiving a reasoner output from the reasoner language model (108), the reasoner output comprising, code and code comments,
reviewing the code comments to identify a code comment indicative of an assumption,
generating a corrective reasoner prompt to remove the identified assumption from the code,
inputting the corrective reasoner prompt into the reasoner language model, and

receiving revised code with the assumption removed from the code from the reasoner language model (108).

FIG. 1

FIG. 2

TASK 300: "Find the color of the ball in a room next to the room with 4 black keys"

ANSWER 302: The color of the ball is black

# FIG. 3A

# FIG. 3B

TASK 312: "Pick up the crosshatched box"

ACTIONS 314: pickup(3), remove(8), open(4), pickup(13)

FIG. 3C

ACTIONS 316: pickup(3), remove(8), open(4), remove(10), pickup(13)

FIG. 3D

EP 4 779 535 A1

TASK 400: "Put the soap in the bathroomcabinet"

ACTIONS 402

[walk]<barsoap>(34)
404

[grab]<barsoap>(34)
406

[walk]<bathroomcabinet>(26)
408

ACTIONS 402

[open]<bathroomcabinet>(26)
410

[putin]<barsoap>(34) <bathroomcabinet>(26)
412

FIG. 4

EP 4 779 535 A1

500

RECEIVE INPUT OF TASK INFORMATION AND SCHEMA OF SCENE DATA
502

> RECEIVE INPUT OF GUIDANCE 504

> RECEIVE INPUT OF ONE OR MORE TASK EXAMPLES 506

> RECEIVE INPUT OF EXTERNAL TOOL INFORMATION 508

> RECEIVE INPUT OF ENVIRONMENT DESCRIPTION 509

AT REASONER AGENT

> GENERATE REASONER PROMPT 510

> INPUT REASONER PROMPT INTO REASONER LANGUAGE MODEL 512

> RECEIVE REASONER RESPONSE 514
>
> > REVIEW REASONER RESPONSE FOR KEYWORDS INDICATING AN ASSUMPTION, AND GENERATE A PROMPT TO REMOVE IDENTIFIED ASSUMPTIONS 516

> SEND QUERY TO THE RETRIEVER AGENT 518

TO FIG. 5B

# FIG. 5A

500

FROM FIG. 5A

AT RETRIEVER AGENT

RECEIVE QUERY FROM REASONER AGENT 520

GENERATE RETRIEVER PROMPT CONTAINING SCHEMA OF SCENE DATA, CODE INSTRUCTIONS, AND QUERY FROM REASONER AGENT 522

INPUT RETRIEVER PROMPT INTO RETRIEVER LANGUAGE MODEL 524

RECEIVE RETRIEVER OUTPUT FROM RETRIEVER LANGUAGE MODEL, THE RETRIEVER OUTPUT COMPRISING CODE TO QUERY SCENE DATA REPRESENTED BY SCHEMA 526

USE CODE TO QUERY SCENE DATA, AND RECEIVE ONE OR MORE RESULTS OF QUERY 528

GENERATE PROMPT TO REQUEST REVIEW OF HISTORY OF CODE EXECUTION ATTEMPTS AND CODE EXECUTION OUTCOMES FOR ERRORS 530

GENERATE PROMPT TO REQUEST CORRECTION OF ERRORS BASED ON RESULTS OF THE REVIEW 532

SEND RESULTS OF QUERY TO THE REASONER AGENT 534

FIG. 5B

600

**AT A REASONER AGENT**

RECEIVE RESULTS [n-1] 602

GENERATE A REASONER PROMPT [n] COMPRISING HISTORY, TASK INFORMATION, EXTERNAL TOOL INFORMATION, SCHEMA OF SCENE DATA, AND ENVIRONMENT DESCRIPTION 604

INPUT REASONER PROMPT [n] INTO A REASONER LANGUAGE MODEL 606

RECEIVE A REASONER OUTPUT [n] FROM THE REASONER LANGUAGE MODEL, THE REASONER OUTPUT [n] REGARDING A RESPONSE [n] REGARDING THE SPATIAL REASONING TASK 608

CHECK FOR KEYWORDS INDICATIVE OF ASSUMPTIONS, AND PROMPT TO REMOVE ASSUMPTIONS WHEN KEYWORDS ARE FOUND 610

STORE RESPONSE [n] AS PART OF SOLUTION OF SPATIAL REASONING TASK 612

IS SPATIAL REASONING PROBLEM FULLY SOLVED? 614

YES

OUTPUT SOLUTION 618

NO

IS RESPONSE [n] CODE TO UTILIZE EXTERNAL TOOL? 622

YES 624

NO 630

EXECUTE CODE TO UTILIZE EXTERNAL TOOL AND RECEIVE RESULTS [n] FROM EXTERNAL TOOL 626

CHECK FOR EXECUTION ERRORS AND PROMPT REASONER LANGUAGE MODEL FOR CORRECTED CODE WHEN EXECUTION ERRORS OCCUR 628

SEND A QUERY TO THE RETRIEVER AGENT BASED UPON THE RESPONSE REGARDING SPATIAL REASONING TASK 632

TO FIG. 6B

# FIG. 6A

600

FROM FIG. 6A

AT THE RETRIEVER AGENT

RECEIVE QUERY [n] 634

GENERATE RETRIEVER PROMPT [n] CONTAINING SCHEMA OF SCENE DATA, CODE INSTRUCTIONS, AND QUERY [n] 636

INPUT THE RETRIEVER PROMPT [n] INTO A RETRIEVER LANGUAGE MODEL 638

RECEIVE AN OUTPUT [n] FROM THE RETRIEVER LANGUAGE MODEL, OUTPUT [n] COMPRISING CODE [n] REPRESENTING A QUERY [n] TO QUERY THE SCENE DATA REPRESENTED BY THE SCHEMA OF SCENE DATA 640

QUERY SCENE DATA USING CODE [n] AND RECEIVING RESULTS [n] 642

SEND RESULTS [n] OF THE QUERY TO REASONER AGENT 644

# FIG. 6B

700

RECEIVE INPUT OF TASK INFORMATION, A SCHEMA OF SCENE DATA, AND AN ENVIRONMENT DESCRIPTION 702

GENERATE A REASONER PROMPT CONTAINING TASK INFORMATION, THE SCHEMA OF SCENE DATA, AND THE ENVIRONMENT DESCRIPTION, AND INPUT REASONER PROMPT INTO REASONER LANGUAGE MODEL 704

RECEIVE A REASONER OUTPUT FROM THE REASONER LANGUAGE MODEL, THE REASONER OUTPUT COMPRISING, IN PART, CODE AND CODE COMMENTS 706

REVIEW THE CODE COMMENTS FOR A CODE COMMENT INDICATIVE OF AN ASSUMPTION 708

REVIEW FOR KEYWORDS INDICATIVE OF ASSUMPTION 710

IDENTIFY THE CODE COMMENT INDICATIVE OF THE ASSUMPTION 712

GENERATE A CORRECTIVE REASONER PROMPT TO REMOVE THE ASSUMPTION FROM THE CODE 714

INPUT THE CORRECTIVE REASONER PROMPT INTO THE REASONER LANGUAGE MODEL 716

RECEIVE REVISED CODE WITH THE ASSUMPTION REMOVED FROM THE CODE FROM THE REASONER LANGUAGE MODEL 718

# FIG. 7

COMPUTING SYSTEM          800

LOGIC MACHINE
802

STORAGE MACHINE
804

DISPLAY SUBSYSTEM
806

INPUT SUBSYSTEM
808

COMMUNICATION SUBSYSTEM
810

# FIG. 8

Europäisches
Patentamt

European
Patent Office

Office européen
des brevets

# EUROPEAN SEARCH REPORT

**Application Number**

EP 26 15 1519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "RwR: A REASON-WHILE-RETRIEVE FRAMEWORK FOR REASONING ON SCENE GRAPHS WITH LLMS", , 24 November 2024 (2024-11-24), XP093390642, OpenReview.net Retrieved from the Internet: URL:https://openreview.net/notes/edits/att achment?id=Hjcmwt7leh&name=pdf [retrieved on 2026-04-22] * page 1 - page 10 * * Appendices A-G * ----- | 1-15 | INV. G06N20/00 G06V10/86  ADD. G06N5/022 |
| L | Anonymous: "Revision History", , 24 November 2024 (2024-11-24), XP093390657, Retrieved from the Internet: URL:https://openreview.net/revisions?id=pT qsapWIPo [retrieved on 2026-04-22] * the whole document * ----- | 1-15 | |
| A | Rana Krishan ET AL: "SayPlan: Grounding Large Language Models using 3D Scene Graphs for Scalable Robot Task Planning", arXiv.org, 27 September 2023 (2023-09-27), XP093390666, DOI: 10.48550/arXiv.2307.06135 Retrieved from the Internet: URL:https://arxiv.org/pdf/2307.06135 [retrieved on 2026-04-22] * page 1 - page 8 * * page 13 - page 50 * ----- | 1-15 | TECHNICAL FIELDS SEARCHED (IPC)  G06N G06F G06V |

-/--

The present search report has been drawn up for all claims

| Place of search | Date of completion of the search | Examiner |
|---|---|---|
| The Hague | 23 April 2026 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 26 15 1519

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Chen Yiye ET AL: "Schema-Guided Scene-Graph Reasoning based on Multi-Agent Large Language Model System", arXiv.org, 8 August 2025 (2025-08-08), XP093390661, DOI: 10.48550/arXiv.2307.06135 Retrieved from the Internet: URL:https://arxiv.org/pdf/2502.03450 [retrieved on 2026-04-22] * the whole document * | 1-15 | |

-----

TECHNICAL FIELDS
SEARCHED (IPC)

The present search report has been drawn up for all claims

| Place of search | Date of completion of the search | Examiner |
|---|---|---|
| The Hague | 23 April 2026 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BABYAI** ; **MAXIME CHEVALIER-BOISVERT,** ; **DZMITRY BAHDANAU** ; **SALEM LAHLOU** ; **LUCAS WILLEMS,** ; **CHITWAN SAHARIA,** ; **THIEN HUU NGUYEN** ; **YOSHUA BENGIO.** Babyai: A platform to study the sample efficiency of grounded language learning.. *arXiv preprint arXiv:1810. 08272*, 2018
- **VIRTUALHOME** ; **XAVIER PUIG** ; **KEVIN RA,** ; **MARKO BOBEN,** ; **JIAMAN LI** ; **TINGWU WANG** ; **SANJA FIDLER** ; **ANTONIO TORRALBA.** Virtualhome: Simulating household activities via programs.. *In Proceedings of the IEEE conference on computer vision and pattern recognition*, 2018, 8494-8502
- **MAXIME CHEVALIER-BOISVERT** ; **DZMITRY BAHDANAU** ; **SALEM LAHLOU** ; **LUCAS WILL-EMS** ; **CHITWAN SAHARIA** ; **THIEN HUU NGUYEN** ; **YOSHUA BENGIO.** Babyai: A platform to study the sample efficiency of grounded language learning.. *arXiv preprint arXiv:1810.08272*, 2018
- **XAVIER PUIG** ; **KEVIN RA** ; **MARKO BOBEN** ; **JIAMAN LI** ; **TINGWU WANG** ; **SANJA FIDLER** ; **ANTONIO TORRALBA.** Virtualhome: Simulating household activities via programs. *In Proceedings of the IEEE conference on computer vision and pattern recognition*, 2018, 8494-8502
- **YIRAN WU** ; **SHAOKUN ZHANG** ; **ERKANG ZHU** ; **BEIBIN LI** ; **LI JIANG** ; **XIAOYUN ZHANG** ; **CHI WANG.** Autogen: Enabling next-gen llm applications via multi-agent conversation framework.. *arXiv preprint arXiv:2308.08155,*, 2023
- **TAKESHI KOJIMA** ; **SHIXIANG SHANE GU** ; **MACHEL REID** ; **YUTAKA MATSUO,** ; **YUSUKE IWASAWA.** Large language models are zero-shot reasoners.. *Advances in neural information processing systems*, 2022, vol. 35, 22199-22213
- **DENNY ZHOU** ; **NATHANAEL SCHÄRLI** ; **LE HOU** ; **JASON WEI** ; **NATHAN SCALES** ; **XUEZHI WANG** ; **DALE SCHUURMANS** ; **CLAIRE CUI,** ; **OLIVIER BOUSQUET** ; **QUOC LE et al.** Least-to-most prompting enables complex reasoning in large language models.. *arXiv preprint arXiv:2205.10625,*, 2022
- **JASON WEI** ; **XUEZHI WANG** ; **DALE SCHUUR-MANS** ; **MAARTEN BOSMA** ; **FEI XIA** ; **ED CHI** ; **QUOC V LE** ; **DENNY ZHOU et al.** Chain-of-thought prompting elicits reasoning in large language models.. *Advances in neural information processing systems*, 2022, vol. 35, 24824-24837

- **HENG WANG,** ; **SHANGBIN FENG,** ; **TIANXING HE** ; **ZHAOXUAN TAN,** ; **XIAOCHUANG HAN** ; **YULIA TSVETKOV.** Can language models solve graph problems in natural language?. *In Thirty-seventh Conference on Neural Information Processing Systems*, 2023, https://openreview.net/forum?id=UDqHhbqYJV
- **KRISHAN RANA** ; **JESSE HAVILAND** ; **SOURAV GARG** ; **JAD ABOU-CHAKRA,** ; **IAN REID,** ; **NIKO SUENDERHAUF.** Sayplan: Grounding large language models using 3d scene graphs for scalable task planning.. *In 7th Annual Conference on Robot Learning*, 2023, https://openreview.net/forum?id=wMpOMO0Ss7a
- **YAO, SHUNYU et al.** React: Synergizing reasoning and acting in language models. *arXiv preprint arXiv:2210.03629*, 2022
- **IRO ARMENI** ; **ZHI-YANG HE,** ; **JUNYOUNG GWAK** ; **AMIR R ZAMIR** ; **MARTIN FISCHER** ; **JITENDRA MALIK,** ; **SILVIO SAVARESE.** 3d scene graph: A structure for unified semantics, 3d space, and camera.. *In Proceedings of the IEEE/CVF international conference on computer vision*, 2019, 5664-5673
- Progprompt: Generating situated robot task plans using large language models.. **ISHIKA SINGH,** ; **VALTS BLUKIS** ; **ARSALAN MOUSAVIAN,** ; **ANKIT GOYAL** ; **DANFEI XU** ; **JONATHAN TREMBLAY** ; **DIETER FOX** ; **JESSE THOMASON** ; **ANIMESH GARG.** In 2023 IEEE International Conference on Robotics and Automation (ICRA). IEEE, 2023, 11523-11530
- **HONGXIN ZHANG** ; **WEIHUA DU,** ; **JIAMING SHAN,** ; **QINHONG ZHOU** ; **YILUN DU** ; **JOSHUA B TENENBAUM** ; **TIANMIN SHU** ; **CHUANG GAN.** Building cooperative embodied agents modularly with large language models.. *In International Conference on Learning Representations,*, 2024
- **CHAN HEE SONG** ; **JIAMAN WU** ; **CLAYTON WASHINGTON** ; **BRIAN M. SADLER** ; **WEI-LUN CHAO,** ; **YU SU.** Llm-planner: Few-shot grounded planning for embodied agents with large language models. *In International Conference on Computer Vision*, October 2023

- **WENLONG HUANG** ; **FEI XIA,** ; **DHRUV SHAH** ; **DANNY DRIESS,** ; **ANDY ZENG** ; **YAO LU,** ; **PETE FLORENCE,** ; **IGOR MORDATCH,** ; **SERGEY LEVINE** ; **KAROL HAUSMAN et al.** Grounded decoding: Guiding text generation with grounded models for robot control.. *arXiv preprint arXiv:2303.00855,*, 2023